# EUROPEAN PATENT SPECIFICATION

(11) **EP 4 357 396 B1**
(45) Date of publication and mention of the grant of the patent: **25.03.2026**
(21) Application number: 22825098.1
(22) Date of filing: 17.06.2022
(51) Int. Cl.: C08J 11/10, B29B 17/00, B29B 17/02, B29B 17/04, C08J 11/14

(54) **SEPARATION AND RECOVERY DEVICE**
TRENNUNGS- UND RÜCKGEWINNUNGSVORRICHTUNG
DISPOSITIF DE SÉPARATION ET DE RÉCUPÉRATION

(30) Priority: 18.06.2021 JP 2021101555; 16.06.2022 JP 2022097670
(43) Date of publication of application: 24.04.2024
(73) Proprietor: TOPPAN INC., Tokyo 110-8560 (JP)
(72) Inventor: WATANABE, Masaru, Sendai-shi, Miyagi 980-8577 (JP); YAMAGUCHI, Aritomo, Sendai-shi, Miyagi 983-8551 (JP); SATO, Osamu, Sendai-shi, Miyagi 983-8551 (JP); IRISA, Yuuma, Ube-shi, Yamaguchi 755-8633 (JP); TAKAMA, Akira, Ube-shi, Yamaguchi 755-8633 (JP); NISHIMURA, Kousuke, Ube-shi, Yamaguchi 755-8633 (JP); KUJIRAOKA, Hiroki, Ube-shi, Yamaguchi 755-8633 (JP); MIYAZAKI, Hideki, Sendai-City, Miyagi 981-3224 (JP); AKIMOTO, Keita, Kusatsu-shi, Shiga 525-0044 (JP); TAKAHATA, Takuya, Kusatsu-shi, Shiga 525-0044 (JP); KUGIMOTO, Daisuke, Yokkaichi-shi, Mie 510-8540 (JP); KOUDA, Shingo, Yokkaichi-shi, Mie 510-8540 (JP); HAMURA, Satoshi, Tokyo 105-8623 (JP); IMAI, Takahiro, Tokyo 110-8560 (JP); OMORI, Yumiko, Tokyo 110-8560 (JP); KAWA, Manabu, Tokyo 105-0021 (JP)
(74) Representative: Forstmeyer, Dietmar
(86) International application number: PCT/JP2022/024409
(87) International publication number: WO 2022/265111

(56) References cited:
- JP-A- 2005 330 211
- JP-A- 2011 168 755
- JP-A- H0 892 411
- JP-A- H08 302 061
- JP-B2- 5 610 383

## Description

### FIELD OF THE INVENTION

The present invention relates to an apparatus for continuously separating and recovering, from a resin mixture containing at least a resin 1 containing a hydrolyzable polymer A and a resin 2 containing a nonhydrolyzable polymer B, a hydrolytic component a of the hydrolyzable polymer A and the nonhydrolyzable polymer B.

### BACKGROUND OF THE INVENTION

For recycling of a polymer or a hydrolytic component thereof, a resin waste containing a single component is often used. This is in order to recover a polymer without impairing stability such as a melting temperature and a remolding condition of the polymer when the polymer is recycled as it is (also referred to as material recycling). Meanwhile, this is in order to make it easy to uniquely and easily determine decomposition conditions for recovering a raw material compound of a polymer with a maximum yield when the polymer is recycled into the raw material compound (also referred to as chemical recycling).

On the other hand, in an actual resin waste, a plurality of kinds of resins (polymers) are mixed, and a deposited layer of metal, ceramic, or the like, a printed layer, or the like is included for ensuring functionality of the resin itself and decorativeness. In addition, dirt may be attached to the actual resin waste because the actual resin waste is a waste. Such a resin waste is discharged as a plastic waste from general households and an industrial waste from business offices, except for some exceptions such as PET bottles and high-purity resins discharged from resin molding plants and the like. A main reason for this is that it is difficult for a general user to discriminate the kind of resin and discard the resin, and that the actual resin waste is a mixture of a plurality of kinds of resins. Therefore, most of the resin wastes are often subjected to thermal recycling by combustion.

Under such a circumstance, Patent Literature 1 proposes a method in which a waste such as a plastic multilayer molded article including a condensation polymer film layer and an addition polymer film layer is collectively treated with water at a high temperature to decompose and recover the condensation polymer to a monomer, and a mixture of remaining addition polymers is converted into a decomposed oil. This method has been tested by a simple batch type apparatus, and is applicable only under limited conditions although one stone is put on the current situation. Therefore, in recycling of the actual resin waste as described above, practicability and versatility are low, and further examination is required.

Patent Literature 2 discloses a method and an apparatus for separating composite plastics containing polyolefins.

### CITATION LIST

### PATENT LITERATURE

Patent Literature 1: JP-A-H11-323006 ("JP-A" means an unexamined published Japanese patent application)
Patent Literature 2: JP 5 610383 B2

### SUMMARY OF INVENTION

### TECHNICAL PROBLEM

As described above, there are various recycling methods as long as the resin waste contains a single polymer component, but a conventional recycling method cannot be often applied to a resin waste containing a mixture of a plurality of kinds of polymers. Therefore, most resin wastes are subjected to thermal recycling or subjected to a cascading utilization method in which a large amount of filler is mixed with the resin waste while the resin waste is a mixture and the resin waste is reused in a field where purity is not required. A method of recycling such a resin waste containing a mixture of a plurality of kinds of polymers, particularly an industrially advantageous continuous recycling method, a recycling apparatus capable of implementing these recycling methods, and the like have not been established yet.

For example, also in the method described in Patent Literature 1 described above, it is difficult to material-recycle an addition polymer, and the addition polymer must be collectively converted into a decomposed oil and used as a fuel equivalent to a heavy oil. This is because since the addition polymer is not decomposed by a hydrothermal reaction treatment, a recyclable purity cannot be ensured due to a remaining monomer derived from a condensation polymer and a remaining (mixed) condensation polymer that cannot be decomposed.

When a resin molded article or the like (for example, a resin part and a resin product) is produced by combining a plurality of polymers, usually, a technique of using polypropylene (PP) or polyethylene (PE) which is an addition polymer as a base material, and laminating a resin containing various polymers for imparting functionality thereto is widely used. In this case, since half or more of target resin molded articles is formed of an addition polymer such as PP or PE, even when these resin molded articles are applied to the method described in Patent Literature 1, the addition polymer occupying half or more of recovered products is subjected to oiling, that is, thermal recycling, and thus, a highly versatile recycling method is not performed.

The present invention provides an apparatus capable of continuously separating and recovering, from a resin mixture containing a resin containing a hydrolyzable polymer and a resin containing a nonhydrolyzable polymer, the hydrolyzable polymer as a raw material compound thereof and the nonhydrolyzable polymer as a high-purity polymer in which mixing of the hydrolyzable polymer is suppressed.

### SOLUTION TO PROBLEM

The object of the present invention has been achieved by the following means.
<1> A separation and recovery apparatus for continuously separating and recovering, from a resin mixture containing at least a resin 1 containing a hydrolyzable polymer A as a main component and a resin 2 containing a nonhydrolyzable polymer B as a main component, a hydrolytic component a of the hydrolyzable polymer A and the nonhydrolyzable polymer B, the apparatus including:
   a crushing unit that crushes the resin mixture;
   a melting/discharging unit that melts a crushed product obtained by the crushing unit to form a fluid and discharges the fluid at a high pressure; and
   a hydrothermal reaction treatment unit that continuously subjects the fluid discharged from the melting/discharging unit to a hydrothermal reaction treatment,

   wherein, in the melting/discharging unit, the hydrolyzable polymer A is hydrolyzed, and the hydrolytic component a of the hydrolyzable polymer A is dissolved and transferred into water permeating a sintered alloy diaphragm, thereby separating the nonhydrolyzable polymer B;
      characterized in that the separation and recovery apparatus further comprises, between the melting/discharging unit and the hydrothermal reaction treatment unit, a separation unit that removes an insoluble component contained in the fluid discharged from the melting/discharging unit,
   wherein the separation unit comprises:
      an inlet into which the fluid discharged from the melting/discharging unit flows;
      a first flow path which is connected to the inlet and in which the fluid flowing in from the inlet flows at a high pressure;
      a separation film that is disposed along the first flow path and separates an insoluble component in the fluid from the fluid;
      a second flow path which is disposed on a side opposite to the first flow path with respect to the separation film and in which the fluid from which the insoluble component has been removed by the separation film flows;
      a fluid outlet which is connected to the second flow path and from which the fluid from which the insoluble component has been removed flows out; and
      an insoluble component discharge port which extends from the first flow path and from which the separated insoluble component is discharged.
<2> The separation and recovery apparatus described in <1>, wherein the melting/discharging unit melts and discharges the crushed product.
<3> The separation and recovery apparatus described in <1> or <2>, including, at a preceding stage of the hydrothermal reaction treatment unit, a concentration unit that separates the nonhydrolyzable polymer B and increases a content of the nonhydrolyzable polymer B in the fluid to be transferred to the hydrothermal reaction treatment unit,
   wherein the concentration unit includes:
      a cooling subunit that precipitates and solidifies some of the polymers by cooling the transferred fluid; and
      a removal subunit that is connected to the cooling subunit and removes the precipitated and solidified polymer component, and
   wherein the removal subunit includes:
      an inlet into which the fluid transferred from the cooling subunit and containing the precipitated and solidified polymer flows;
      a first flow path which is connected to the inlet and in which the fluid flowing in from the inlet flows;
      a separation film that is disposed along the first flow path and separates the precipitated and solidified polymer contained in the fluid from the fluid;
      a second flow path which is disposed on a side opposite to the first flow path with respect to the separation film and in which the fluid from which the precipitated and solidified polymer has been removed by the separation film flows;
      a fluid outlet which is connected to the second flow path and from which the fluid from which the precipitated and solidified polymer has been removed flows out; and
      a discharge port that extends from the first flow path and discharges the precipitated and solidified polymer that has been separated.
<4> The separation and recovery apparatus described in any one of <1> to <3>, wherein the hydrothermal reaction treatment unit includes:
   an inlet into which a fluid containing the hydrolyzable polymer A flows;
   a first flow path which is connected to the inlet and in which the fluid flowing in from the inlet flows;
   a residue outlet which extends from the first flow path and from which a residue of the fluid that has been subjected to a hydrothermal reaction treatment flows out;
   a diaphragm that is disposed along the first flow path, is water-permeable, and blocks passage of a molten polymer;
   a second flow path which is disposed adjacent to the first flow path via the diaphragm on a side opposite to the first flow path with respect to the diaphragm and in which water flows;
   a water inlet which is formed in the second flow path and through which water flows into the second flow path; and
   a water mixture outlet which is formed in the second flow path and through which a water mixture containing the hydrolytic component a of the hydrolyzable polymer A, which has flowed in from the water inlet and passed through the diaphragm while flowing in the second flow path, flows out from the second flow path.
<5> The separation and recovery apparatus described in any one of <1> to <4>, including the one hydrothermal reaction treatment unit or the two or more hydrothermal reaction treatment units arranged and connected in series or in parallel.
<6> The separation and recovery apparatus described in any one of <1> to <5>, including, at a subsequent stage of the hydrothermal reaction treatment unit, a hydrolytic component recovery unit that recovers the hydrolytic component a of the hydrolyzable polymer A from the water mixture,
   wherein the hydrolytic component recovery unit includes:
   a cooling and precipitating subunit including: an inlet into which the water mixture containing the hydrolytic component a flows; a flow path A which is connected to the inlet and in which the water mixture flowing in from the inlet flows; and an outlet which is connected to the flow path A and from which the hydrolytic component a flows out together with water; and
   a solid-liquid separation subunit that is connected to the outlet of the cooling and precipitating subunit and separates the hydrolytic component a from the water mixture.
<7> The separation and recovery apparatus described in any one of <1> to <6>, including, at a subsequent stage of the hydrothermal reaction treatment unit, a polymer B recovery unit that recovers the nonhydrolyzable polymer B from the residue,
   wherein the polymer B recovery unit includes:
   a residue inlet into which the residue flows;
   a flow path P which is connected to the residue inlet and in which the residue flowing in from the residue inlet flows;
   a removal film that is disposed along the flow path P and removes water and the hydrolytic component a remaining in the residue by causing the water and the hydrolytic component a to pass through the removal film; and
   an outlet which is connected to a downstream side of the removal film in the flow path P and in which the polymer B separated from the remaining water and hydrolytic component a flows out.

### ADVANTAGEOUS EFFECTS OF INVENTION

The separation and recovery apparatus of the present invention can separate and recover, from a resin mixture containing a resin containing a hydrolyzable polymer and a resin containing a nonhydrolyzable polymer, the hydrolyzable polymer as a raw material compound thereof (hydrolytic component) and the nonhydrolyzable polymer as a high-purity polymer by a continuous process

The above and other features and advantages of the present invention will be more apparent from the following description appropriately with reference to the attached drawings.

### BRIEF DESCRIPTION OF DRAWINGS

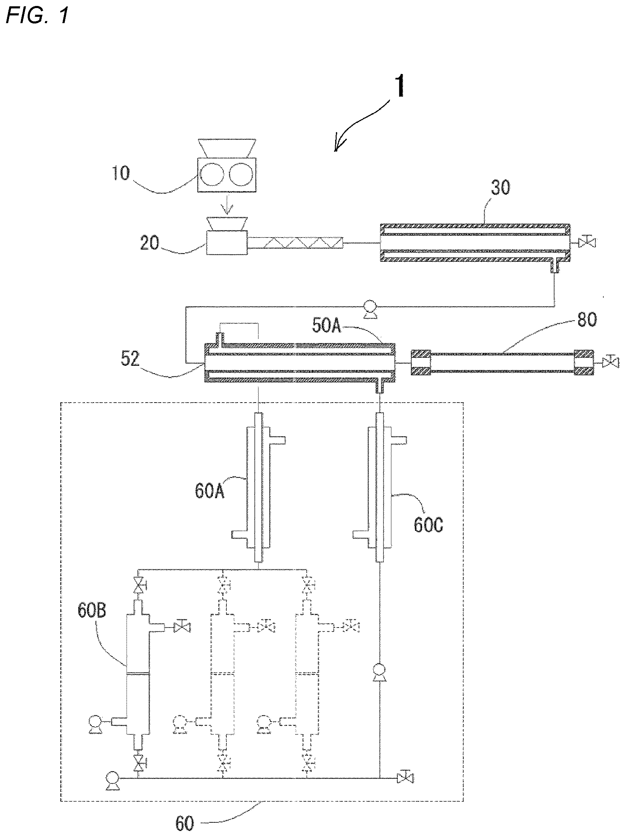

{FIG. 1}
   FIG. 1 is a schematic view of a separation and recovery apparatus 1 according to a preferred embodiment of the present invention.
{FIG. 2}
   FIG. 2 is a diagram illustrating a series of treatment processes in the separation and recovery apparatus 1 according to a preferred embodiment of the present invention and a workpiece obtained in each unit.
{FIG. 3}
   FIG. 3 is a partially cutout view schematically illustrating a separation unit 30 suitable for the separation and recovery apparatus of the present invention.
{FIG. 4}
   FIG. 4 is a partially cutout view schematically illustrating a hydrothermal reaction treatment unit 50A suitable for the separation and recovery apparatus of the present invention.
{FIG. 5}
   FIG. 5 is a partially cutout view schematically illustrating a hydrothermal reaction treatment unit 50B suitable for the separation and recovery apparatus of the present invention.
{FIG. 6}
   FIG. 6 is a partially cutout view schematically illustrating a hydrothermal reaction treatment unit 50C suitable for the separation and recovery apparatus of the present invention.
{FIG. 7A}
   FIG. 7A is a partially cutout view schematically illustrating a hydrolytic component recovery unit suitable for the separation and recovery apparatus of the present invention.
{FIG. 7B}
   FIG. 7B is a partially cutout view schematically illustrating another hydrolytic component recovery unit suitable for the separation and recovery apparatus of the present invention.
{FIG. 8}
   FIG. 8 is a partially cutout view schematically illustrating a polymer B recovery unit 80 suitable for the separation and recovery apparatus of the present invention.
{FIG. 9}
   FIG. 9 is a schematic view of a separation and recovery apparatus 2 according to another preferred embodiment of the present invention.
{FIG. 10}
   FIG. 10 is a diagram illustrating a series of treatment processes in the separation and recovery apparatus 2 according to another preferred embodiment of the present invention and a workpiece obtained in each unit.
{FIG. 11}
   FIG. 11 is a partially cutout view schematically illustrating a concentration unit 40 suitable for the separation and recovery apparatus of the present invention.
{FIG. 12}
   FIG. 12 is a schematic view of a separation and recovery apparatus 3 according to still another preferred embodiment of the present invention.
{FIG. 13}
   FIG. 13 is a diagram illustrating a series of treatment processes in the separation and recovery apparatus 3 according to still another preferred embodiment of the present invention and a workpiece obtained in each unit.
{FIG. 14}
   FIG. 14 is a schematic view of a separation and recovery apparatus 4 according to further still another preferred embodiment of the present invention.
{FIG. 15}
   FIG. 15 is a diagram illustrating a series of treatment processes in the separation and recovery apparatus 4 according to further still another preferred embodiment of the present invention and a workpiece obtained in each unit.

### DESCRIPTION OF EMBODIMENTS

In the present invention, a hydrolyzable polymer refers to a polymer in which a bond of a constituent raw material compound constituting the polymer is formed via a hydrolyzable bond (a main chain of the polymer is hydrolyzable), in which the polymer undergoes hydrolysis due to chemical properties of the constituent raw material compound in a hydrothermal reaction treatment unit in the separation and recovery apparatus of the present invention (for example, under specific hydrothermal reaction treatment conditions described later). Meanwhile, a nonhydrolyzable polymer refers to a polymer in which a bond of a constituent raw material compound constituting the polymer is formed via a bond that is not hydrolyzed or is hardly hydrolyzed, in which the polymer is not hydrolyzed or is hardly hydrolyzed into the constituent raw material compound in a hydrothermal reaction treatment unit in the separation and recovery apparatus of the present invention (for example, under specific hydrothermal reaction treatment conditions described later), and specific representative examples thereof include a polymer in which a chemical structure of a polymer main chain (linking chain) substantially contains only carbon atoms.

In the present invention, a resin containing a specific polymer as a main component refers to a resin containing a specific polymer as a maximum content component among polymer components.

In the present invention, a numerical range expressed with the term "to" refers to a range including numerical values before and after the term "to" as a lower limit and an upper limit.

First, a resin mixture that is a treatment target used in the separation and recovery apparatus of the present invention will be described.

### [Resin mixture]

A treatment target used in the separation and recovery apparatus of the present invention is a mixture containing at least a resin 1 containing a hydrolyzable polymer A as a main component and a resin 2 containing a nonhydrolyzable polymer B as a main component. The resin 1 and the resin 2 only need to constitute a part of the mixture as, for example, a molded body or a film-forming body, and can constitute the mixture in a form of, for example, a molded base material, a resin layer (resin film), or the like. This mixture contains at least the resin 1 containing the hydrolyzable polymer A and the resin 2 containing the nonhydrolyzable polymer B, and therefore is also referred to as a resin mixture or a heterogeneous resin mixture.

The mixture only needs to be a mixture containing the resin 1 and the resin 2, and examples thereof include a simple mixture of the resin 1 and the resin 2 which are not laminated on each other, a laminate of the resin 1 and the resin 2, and a mixture of the simple mixture and the laminate. As the mixture, a laminate (laminated film) can be used, and in this case, a plastic molded article having a multilayer structure (also referred to as a multilayer plastic film), particularly one containing heterogeneous materials (also referred to as a heterogeneous multilayer film), which is discarded in a large amount as a waste plastic, can be applied. The form (shape) of the mixture is not particularly limited, and the mixture or the laminate can be used as it is. Each of the resin 1 and the resin 2 in the mixture, particularly in the laminate, may include a single resin layer or two or more resin layers.

A mixing ratio (mass ratio) between the resin 1 and the resin 2 in the mixture is not particularly limited, and can be appropriately set in consideration of a generation amount of a decomposition product of the hydrolyzable polymer A, a use amount of the nonhydrolyzable polymer B, operation cost of the apparatus, and the like. For example, resin 1 : resin 2 can be set to 1: 0.1 to 1 : 10 (mass ratio).

The resin 1 in the mixture contains one or more kinds of hydrolyzable polymers A as a main component. Examples of the hydrolyzable polymer include a condensation polymer. The condensation polymer is a polymer generated by polycondensation in which a low molecular weight molecule such as a water molecule or an alcohol molecule is detached from a monomer serving as a polymerization reaction raw material. Examples thereof include polyesters, polycarbonates, polyamides (also abbreviated as PA in the present invention) (also including ring-opening polymerization polyamides such as nylon 6, generated not by polycondensation but by ring-opening polymerization of ε-caprolactam for convenience in the present invention), polyacetals, and polyethers. Note that, in the present invention, even when a polymer is generated by a reaction mode other than polycondensation (for example, ring-opening polymerization), the polymer is included here for convenience as long as the polymer is any one of the above exemplified polymers. More specific examples thereof will be described below:
a polymer having an ester bond (-COO-) in a repeating unit of a polymer main chain, such as polyethylene terephthalate (PET), polybutylene terephthalate (PBT), polyethylene naphthalate (PEN), polybutylene naphthalate (PBN), or polycarbonate (PC) containing bisphenol A as a main raw material; a polyamide containing an aliphatic diamine such as nylon 6 (PA6), nylon 66 (PA66), nylon 6/66 (PA6/66), nylon 12 (PA12), or hexamethylenediamine and an aromatic dicarboxylic acid such as phthalic acids (terephthalic acid and isophthalic acid) as main raw materials; a polyamide polymer containing an aromatic diamine such as meta-xylenediamine (MXD) and an aliphatic dicarboxylic acid such as adipic acid as main raw materials, such as a polyamide (representative example: PAMXD6); a polyoxymethylene polymer (POM, also referred to as polyacetal polymer); and a polyphenylene ether polymer (PPE) and a polymer alloy modified product thereof (modified PPE; representative example: a polymer alloy of PPE and polystyrene). Among these, PET and PA6 are important as constituent polymers of a multilayer film in terms of versatility and industrial use quantity, and PC, PBT, POM, PPE, and various PAs, which are five major general-purpose engineering plastics, are important in terms of heat resistance and mechanical strength in automotive parts, an electric device (examples: a household electric appliance and a personal computer), plastic parts of portable communication terminals, and the like, and thus the present invention is suitably applied to thermoplastic resin molded bodies using these polymers.

The resin 2 in the mixture contains one or more kinds of nonhydrolyzable polymers B as a main component. Examples of the nonhydrolyzable polymers B include a non-condensation polymer. The non-condensation polymer refers to a polymer in which a polymer main chain skeleton synthesized by addition polymerization, coordination polymerization, metathesis polymerization, or the like contains only carbon atoms, and includes a polymer called a vinyl-based polymer or a cycloolefin polymer. Examples thereof include: a polyolefin polymer (PO) such as polyethylene (PE) or polypropylene (PP); a styrene-based polymer such as polystyrene (PS), an acrylonitrile-butadiene-styrene copolymer (ABS), or an acrylonitrile-styrene copolymer (AS or SAN); a (meth)acrylic polymer such as polymethyl methacrylate (PMMA); and an acrylic polymer such as a copolymer of a general-purpose acrylic monomer (for example, a (meth)acrylic compound such as methyl methacrylate, methyl acrylate, ethyl methacrylate, or ethyl acrylate) and an arbitrary radical polymerizable monomer. Among these, PE, PP, and PS are important as constituent polymers of a multilayer film, ABS and AS are widely used industrially as important structural materials positioned between a general-purpose polyolefin and an engineering plastic, and PMMA is widely used industrially as a transparent polymer. Therefore, the present invention is suitably applied to thermoplastic resin molded bodies using these polymers.

Examples of a combination of the hydrolyzable polymer A and the nonhydrolyzable polymer B contained in the mixture include appropriate combinations of the above polymers, a combination of preferable polymers is preferable, and a combination of a polyamide or a polyester with polyethylene or polypropylene is particularly preferable.

In the present invention, occurrence of a hydrolysis reaction of the hydrolyzable polymer A can be adjusted by changing hydrothermal reaction treatment conditions. Therefore, a resin mixture containing the resin 1 containing two or more kinds of the hydrolyzable polymers A can be used. For example, in a case of a resin mixture containing the resin 1 in which polyethylene terephthalate (PET) and nylon 6 (PA6) are laminated as the hydrolyzable polymer A, or a resin mixture in which PET and PA6 are independently mixed (in a non-laminated state), by selecting hydrothermal reaction treatment conditions in which suitable hydrolysis conditions for PET and PA6 overlap with each other, it is possible to collectively recover hydrolysis products without taking time and effort to sort PET and PA6 in advance.

Each of the resin 1 and the resin 2 may contain a component other than the polymer. Examples of the component other than the polymer include: particles and fibers such as glass, carbon fiber, carbon black, silica, titanium oxide, calcium carbonate, magnesium carbonate, magnesium silicate (talc), kaolin, mica, or an organic or inorganic pigment; a plasticizer such as a long chain fatty acid ester such as a phthalate, an adipate, a phosphate, or a stearate; a heat stabilizer such as a hindered phenol-based compound; an ultraviolet absorber such as an amine-based compound; a lubricant such as a long chain fatty acid ester of a polyhydric alcohol such as glycerin; a crystal nucleating agent such as a carboxylate such as sodium benzoate, sodium phthalate, sodium salicylate, sodium 4-hydroxybenzoate, or sodium stearate, or an organic sulfonate such as sodium benzenesulfonate, sodium toluenesulfonate, or sodium 4-hydroxybenzenesulfonate; a polymer intended to impart a special function, such as a fluororesin containing a fluorine atom in a repeating unit of a chemical structure of a polymer (imparting slipperiness and slidability), such as Teflon (registered trademark), or elastomers (imparting flexibility and toughness); and an additive such as a heat stabilizer, an ultraviolet absorber, a lubricant, a coloring material, a flame retardant, or a reinforcing material (examples: glass fibers and glass flakes). The content of a component other than the polymer in each of the resins is not particularly limited, and can be appropriately set within a range in which the entire resin is fluidized by heating and melting and can be discharged by the melting/discharging unit.

In addition, the resin 1 may contain the nonhydrolyzable polymer B as a polymer component in addition to the hydrolyzable polymer A. Similarly, the resin 2 may contain the hydrolyzable polymer A as a polymer component in addition to the nonhydrolyzable polymer B, but usually does not contain the hydrolyzable polymer A.

The mixture, particularly the laminate, may contain, in addition to the resin 1 and the resin 2, a coating layer C that coats the resin 1 or the resin 2, an adhesive layer D that bonds the resin layers, and the like. Examples of the coating layer C and the adhesive layer D include an inorganic film (including a metal film) made of an inorganic compound and an organic film (including a resin film) made of an organic compound, and materials for forming these layers may be one kind or two or more kinds.

Examples of the material include: metal (a vacuum process such as sputtering or vapor deposition or plating (Examples thereof include inorganic substances such aluminum, silicon, a combination of copper-nickel-chromium, gold, palladium, tin, ruthenium, black trivalent chromium, a transition metal such as a tin-cobalt alloy, and oxides and/or nitrides of these metals. For example, "https://www.tukada-riken.co.jp/products/index.html#wc_anc00001" on the website of Tsukada RIKEN KOGYO K.K. is useful as a reference.)); a ceramic mainly containing a metal oxide such as alumina, silica, zirconia, or titania (used for a hard coat that imparts scratch resistance, an ultraviolet absorbing coat or an antireflection coat to which a transition metal oxide composition is further added, and the like); and ink (Examples thereof include an organic pigment, an inorganic pigment, a dye, a vinyl chloride resin, and a vinyl acetate resin.). A plurality of kinds of the coating layers C and a plurality of kinds of the adhesive layers D may be used in an arbitrary combination in a form of a laminated structure.

Examples of a combination of the polymer A or B with a material forming the coating layer C or the adhesive layer D include appropriate combinations of the above polymer and materials. The present invention is preferably applied to those having a large industrial use quantity, for example, (1) those obtained by laminating, as a heterogeneous multilayer film, the polymer A (representative examples: PET and PA6) on the polymer B such as PE, PP, or PS as a base material, and then laminating a printing layer, a barrier layer (aluminum layer, silica layer, alumina layer, vinylidene chloride layer, or the like) that blocks oxygen and water, an antistatic layer, an adhesive layer that bonds different kinds of films, an antiblocking layer, or the like thereon as the coating layer C and the adhesive layer D, (2) those obtained by coating a molded article (preferably produced by injection molding or extrusion molding) of the five major general-purpose engineering plastics (PC, PBT, POM, PPE, and various PAs) with the above metal or ceramic, and (3) those obtained by coating a large molded article (Examples: automotive parts and home appliance housing) of the polymer B such as PP or ABS with the above ink or ceramic.

A ratio (mass ratio) between the polymer, and the coating layer C and the adhesive layer D is not particularly limited, and can be appropriately set, but usually can be set to, for example, polymer : (coating layer C and adhesive layer D) = 100 : 10 to 100 : 0.001 (mass ratio).

As the resin mixture, in addition to an unused resin mixture, waste plastic (waste or a recovered material such as a used molded article, a molded defective product, or a molded residue) or the like can be used, and in particular, use of waste plastic contributes to circulation of carbon resources and conservation of the global environment. The waste plastic is not particularly limited, and examples thereof include: a plastic automobile part (a chassis, an interior, an outer layer, a window glass portion, an illumination unit such as a headlamp cover or a reflector, a side mirror, a display unit, a safety mechanism such as a safety belt, an airbag, or an airbag cover, a fuel system mechanism such as a tank, a pipe, or a pump, an electric wiring mechanism such as a connector, a mechanical mechanism such as a gear, and the like); a plastic part of an electric device (examples: a household electric appliance and a personal computer) or a portable communication terminal (a housing, a display part, an electric circuit board, an antenna, or the like); various optical disks; a plastic part of a medical and health instrument (a bag for artificial dialysis or infusion, a disposable syringe, a physical training device, or the like); various molded articles such as a container, a packaging tray, stationery, a toy, furniture, daily necessities, and a household electric appliance housing; a packaging film (including: packaging of a pharmaceutical such as a tablet, a powder, or a liquid); and shopping bags. Among these, when the present invention is suitably used for wastes derived from a large number of automobile parts, electric devices, and portable communication terminals, various optical disks, packaging films, or the like, recycling of multilayer plastic films (multilayer plastic laminates) to be discarded in large amounts can be promoted.

In the resin mixture used in the separation and recovery apparatus of the present invention, a molded body of a resin containing a thermoplastic polymer and a molded body of a resin containing a non-thermoplastic polymer may be mixed in the above-described resin mixture. In particular, when a resin mixture derived from waste plastic is used, mixing of a molded body other than the above-described resin mixture is advantageous in that it is not necessary to sort the waste plastic in advance. In addition, when a resin mixture derived from waste plastic is used, for example, a resin mixture in which a paper or plastic label, an inner lid of a cap, or the like are mixed can also be used.

### [Separation and recovery apparatus of the present invention]

A separation and recovery apparatus of the present invention includes: a crushing unit that crushes a resin mixture; a melting/discharging unit that melts a crushed product obtained by the crushing unit to form a fluid and discharges the fluid at a high pressure; and a hydrothermal reaction treatment unit that continuously subjects the fluid (melt) discharged from the melting/discharging unit to a hydrothermal reaction treatment.

Each unit is formed so as to be able to transfer a workpiece treated in the unit to a next unit through a transfer pipe connecting adjacent units. In the separation and recovery apparatus of the present invention, units from a unit (usually, a melting/discharging unit) disposed on an upstream side to a unit disposed on a most downstream side are integrally connected to each other with a transfer pipe, and pressure is set so as to gradually decrease from the unit disposed on the upstream side toward the unit disposed on the downstream side. As a result, the operation can be performed without disposing a unit for pressurizing a fluid other than the melting/discharging unit for transferring the fluid. Note that, in design of the apparatus, a pressure amplification mechanism such as a line pump applicable to high temperature can also be used depending on a pressure resistance limit of the unit. The transfer pipe may include a cooling means or a heating means that are usually used, and may include a valve or the like capable of adjusting a flow rate or a transfer timing.

The separation and recovery apparatus of the present invention including the above units in the above order subjects a fluid (workpiece) obtained by treating a resin mixture in each unit to a hydrothermal reaction treatment in the hydrothermal reaction treatment unit to hydrolyze the hydrolyzable polymer A contained in the resin 1 of the resin mixture to obtain the hydrolytic component a, and dissolves and transfers the hydrolytic component a into water permeating a sintered alloy diaphragm, thereby continuously separating and recovering the hydrolytic component a from the nonhydrolyzable polymer B that is contained in the resin 2 of the resin mixture and does not permeate (pass through) the diaphragm. In addition, the separation and recovery apparatus of the present invention can continuously recover the hydrolytic component of the hydrolyzable polymer A and the nonhydrolyzable polymer regardless of the kinds, combination, or the like of the hydrolyzable polymer and the nonhydrolyzable polymer. Therefore, the separation and recovery apparatus of the present invention can implement continuous and industrial hybrid recycling of a resin waste, which enables chemical recycling and material recycling simultaneously, which enables chemical recycling of the hydrolyzable polymer A and high-purity material recycling of the nonhydrolyzable polymer in a general-purpose manner. In the present invention, "simultaneously" means that the hydrolyzable polymer (hydrolytic component) and the nonhydrolyzable polymer B are separated from each other and recovered (hybrid recycling is enabled) by performing a hydrothermal reaction treatment in the separation and recovery apparatus (a series of treatments performed in units from the pulverizing unit to the hydrothermal reaction treatment unit, and a unit which may be appropriately included and will be described later), and does not mean that the hydrolyzable polymer and the nonhydrolyzable polymer are taken up simultaneously in time.

In addition to the crushing unit, the melting/discharging unit, and the hydrothermal reaction treatment unit, the separation and recovery apparatus of the present invention includes a separation unit, and may appropriately include at least one or a plurality of units selected from a concentration unit, a hydrolytic component recovery unit, a polymer B recovery unit, a circulating water reheating unit, and the like, which will be described later, as arbitrary units, and in a case where the separation and recovery apparatus includes a plurality of arbitrary units, the arbitrary units can be additionally disposed in an arbitrary combination.

Details of the separation and recovery apparatus of the present invention, an operation of each unit, and the like will be described later, and a preferred embodiment of the separation and recovery apparatus of the present invention will be described with reference to the drawings as an example.

### <Preferred separation and recovery apparatus of the present invention>

As illustrated in FIG. 1, a separation and recovery apparatus 1 which is a preferred embodiment of the present invention includes a crushing unit 10, a melting/discharging unit 20, a separation unit 30, a hydrothermal reaction treatment unit 50A, a cooling and precipitating subunit 60A, a solid-liquid separation subunit 60B, a circulating water reheating unit 60C, and a polymer B recovery unit 80. In the separation and recovery apparatus 1, the crushing unit 10, the melting/discharging unit 20, the separation unit 30, and the hydrothermal reaction treatment unit 50A are arranged in series in this order, and the melting/discharging unit 20 to the hydrothermal reaction treatment unit 50A are connected to each other with a transfer pipe. The cooling and precipitating subunit 60A and the polymer B recovery unit 80 are connected and arranged in parallel (while the cooling and precipitating subunit 60A and the polymer B recovery unit 80 are each branched from the hydrothermal reaction treatment unit 50A) to the hydrothermal reaction treatment unit 50A. One solid-liquid separation subunit 60B is connected and disposed on a downstream side of the cooling and precipitating subunit 60A, and the circulating water reheating unit 60C is connected and disposed in an inlet 52 of the hydrothermal reaction treatment unit 50A. In the separation and recovery apparatus 1, the hydrolytic component recovery unit 60 includes the cooling and precipitating subunit 60A on an upstream side and the solid-liquid separation subunit 60B on a downstream side.

In the separation and recovery apparatus 1, the units subsequent to the melting/discharging unit 20 are connected to each other with a transfer pipe that transfers a fluid (molten component) while maintaining a discharge pressure of the melting/discharging unit 20 and a molten state of the fluid, and pressure is set so as to gradually decrease from the melting/discharging unit 20 toward the solid-liquid separation subunit 60B and the polymer B recovery unit 80.

In the separation and recovery apparatus 1, an on-off valve is disposed in each of a transfer pipe connecting the cooling and precipitating subunit 60A and the solid-liquid separation subunit 60B, a transfer pipe extending from the solid-liquid separation subunit 60B, an outlet of each unit, and the like. In addition, a pump is disposed in each of a transfer pipe connecting the separation unit 30 and the hydrothermal reaction treatment unit 50A, a transfer pipe connecting the cooling and precipitating subunit 60A and the circulating water reheating unit 60C, an inlet of each unit, and the like.

The separation and recovery apparatus 1 includes one solid-liquid separation subunit 60B, but may include a plurality of solid-liquid separation subunits 60B (three solid-liquid separation subunits 60B in FIG. 1) connected and arranged in parallel as indicated by a broken line in FIG. 1.

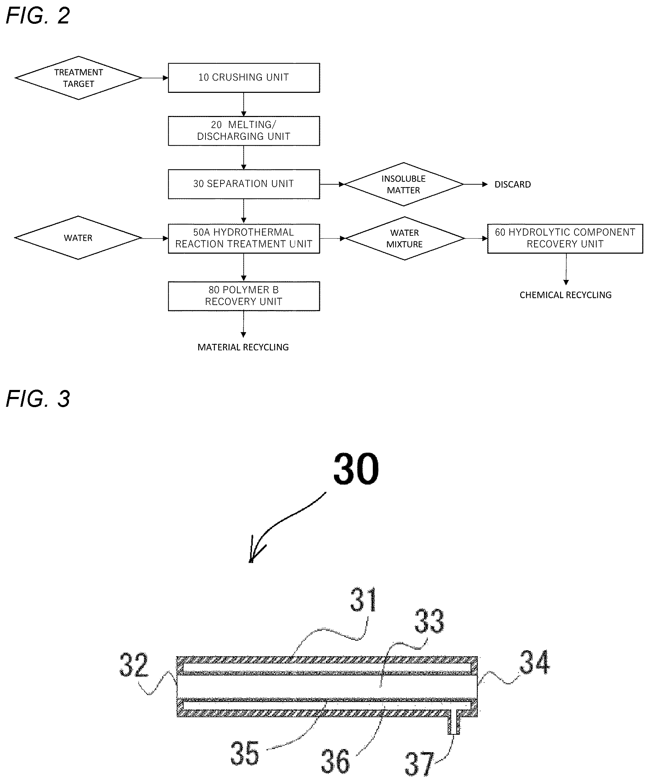

The separation and recovery apparatus 1 can execute a series of treatment processes illustrated in FIG. 2, and can obtain a workpiece obtained by each unit illustrated in FIG. 2. The hydrothermal reaction treatment unit 50 includes a diaphragm that is water-permeable and blocks passage of a molten polymer. In the hydrothermal reaction treatment unit 50, specifically, the partition wall contact type hydrothermal reaction treatment unit 50A, the hydrolytic component a generated by hydrolysis of the hydrolyzable polymer A contained in a fluid transferred from the separation unit 30 (a fluid from which an insoluble component has been removed or separated in the separation unit 30) is dissolved and transferred into water that permeating the sintered alloy diaphragm, whereby the nonhydrolyzable polymer B contained in the fluid can be separated from the fluid (hydrolytic component a) in a molten state with high purity, and the hydrolytic component a of the hydrolyzable polymer A and the nonhydrolyzable polymer B can be continuously recovered. In this way, the resin mixture can be continuously hybrid-recycled.

The resin mixture used in the separation and recovery apparatus 1 is as described above, but for example, a resin mixture containing one kind of hydrolyzable polymer A and one kind of nonhydrolyzable polymer B, in which a melting point MTA of the hydrolyzable polymer A is higher than a melting point MTB of the nonhydrolyzable polymer B, is preferable.

Each unit will be specifically described below.

Note that, in a treatment order (transfer direction) of a treatment target (resin mixture), a side of the crushing unit in which treatment is performed first is referred to as an upstream side or a preceding stage, and a side of the recovery unit is referred to as a downstream side or a subsequent stage.

### (Crushing unit)

The crushing unit 10 is a unit that is disposed on the most upstream side of the separation and recovery apparatus 1 and crushes the resin mixture. A mechanical configuration of the crushing unit is not particularly limited as long as the crushing unit can crush the resin mixture, but the crushing unit is preferably a unit that physically crushes the resin mixture.

The crushing unit only needs to be able to crush the resin mixture, but is preferably able to crush the resin mixture to a size applicable to the melting/discharging unit 20 (for example, a size at which the resin mixture can be quickly melted). The size of a crushed product obtained by the crushing unit 10 and the shape of the crushed product are not particularly limited.

Specific examples of the crushing unit 10 applicable to the separation and recovery apparatus 1 of the present invention include crushing machines such as a jaw crusher, a ball mill, a cutter mill, a cutting machine, and a grinding machine. In addition, the resin mixture may be softened by heat generated during the crushing treatment, and thus crushing may be difficult. In this case, freezing and pulverization using liquid nitrogen or the like can also be combined.

Furthermore, when the resin mixture whose surface is plated or coated is crushed, the plating or the coating layer may be peeled off during the crushing treatment. This makes it possible to reduce the absolute amount of an insoluble component flowing into the melting/discharging unit 20 and the separation unit 30 among the insoluble components contained in the resin mixture. As a result, when the insoluble component is discharged in the separation unit 30, the amount of a fluid (for example, the nonhydrolyzable polymer B) to be mixed with the insoluble component to form a fluid as a whole can be minimized, and a recycling ratio can be improved.

### (Melting/discharging unit)

The melting/discharging unit 20 is disposed on a downstream side of the crushing unit (for example, a crushed product discharge port of the crushing unit 10) directly or (indirectly) via another treatment unit (for example, a transfer apparatus such as a belt conveyor). The melting/discharging unit 20 is a unit that heats and melts a crushed product to impart fluidity to the crushed product, and discharges the crushed product at a high pressure, and preferably melts and discharges the crushed product. Here, "melting the crushed product" means heating the crushed product transferred to the melting/discharging unit 20 to melt and knead a polymer contained in the pulverized product, thereby causing a phase change to a molten state (fluidized state).

Since the melting/discharging unit 20 discharges the crushed product after heating and melting the crushed product to fluidize the crushed product, water or the like for fluidize the crushed product as in a conventional method is unnecessary for discharge, and energy can be significantly reduced as compared with the conventional method. That is, the melting/discharging unit 20 can discharge the crushed product itself of the resin mixture in a molten state without mixing a solvent such as water. As a conventional method, for example, in a case of performing a hydrothermal reaction treatment, generally, a crushed product is mixed with water or the like to form a slurry, the slurry is discharged using a high-pressure slurry pump or the like, and then the slurry is heated from the outside to create a hydrothermal reaction treatment state. However, since this method needs to form a slurry, a limit ratio between the crushed product (solid content) and water or the like is about 1 : 9, and there is a problem that energy is wasted because excessive water or the like mixed at the time of melting is also heated.

A discharged matter discharged from the melting/discharging unit 20 is transferred to a next unit, the separation unit 30 in the present embodiment, at a high pressure while maintaining a molten state (as a fluid).

The melting/discharging unit 20 is not particularly limited, and for example, an extruder having a single shaft or a plurality of shafts, a gear pump, or the like can be applied.

A discharge pressure (transfer pressure to a next unit or the like) of the discharged matter (fluid) melted in and discharged from the melting/discharging unit 20 is preferably a pressure that can ensure a differential pressure between both surfaces of the separation film 35 in the separation unit 30, and can be set to a high pressure exceeding 101 kPa (1 atm), for example. Note that, when the melting/discharging unit 20 cannot discharge the fluid at a pressure that can ensure the differential pressure, pressurization equipment such as a gear pump can be disposed in a transfer pipe connecting the melting/discharging unit and the separation unit to pressurize the fluid to a pressure that can ensure the differential pressure.

The "fluid" prepared by the melting/discharging unit 20 means a melt obtained by simply melting the crushed product of the resin mixture, and what has an extremely large solid content contained as impurities and has no fluidity even when heated and melted is excluded.

In the melting/discharging unit 20, conditions for melting the crushed product cannot be uniquely determined according to the kinds and the like of the hydrolyzable polymer A and the nonhydrolyzable polymer B, and are appropriately set. For example, a heating temperature is not particularly limited, but is usually set to a temperature equal to or higher than the highest melting point of a polymer contained in the resin mixture and lower than the lowest decomposition temperature thereof, and the temperature range is generally 100 to 350°C. The treatment temperature is preferably equal to or higher than a melting point of a polymer having the highest melting point and equal to or lower than the melting point + 50°C, and more preferably equal to or higher than the melting point + 10°C and equal to or lower than the melting point + 30°C. Specifically, when the polymer having the highest melting point is PA6, the treatment temperature is preferably 230 to 280°C and more preferably 240 to 260°C, when the polymer having the highest melting point is PA6/66, the treatment temperature is preferably 200 to 250°C and more preferably 210 to 230°C, and when the polymer having the highest melting point is PA66 or PET, the treatment temperature is preferably 250 to 300°C and more preferably 260 to 280. A heating time (treatment time) is not particularly limited, but there is a high possibility that thermal decomposition of a polymer proceeds by prolonging the heating time. In view of this, it is desirable to make the time as short as possible within a range that can be achieved in terms of an apparatus.

### (Separation unit)

The separation and recovery apparatus 1 of the present invention includes the separation unit 30 between the melting/discharging unit 20 and the hydrothermal reaction treatment unit 50A. The separation unit 30 is a unit that removes an insoluble component such as impurities contained in a discharged matter (fluid) discharged from the melting/discharging unit 20. This separation unit is a unit appropriately applied to the separation and recovery apparatus of the present invention. When the separation unit is not included, the insoluble component remains in the separation and recovery apparatus 1 up to a final outlet together with the nonhydrolyzed polymer B. During this time, the concentration of the insoluble component increases relatively due to removal of the hydrolyzable polymer A or the like. As a result, this causes a decrease in fluidity or clogging in the units, the transfer pipes, and the like. Therefore, it is preferable to remove the insoluble component on an upstream side as much as possible, and this can contribute to stable operation of the apparatus.

As described above, the actual resin waste contains a large amount of insoluble component such as plating, a coating layer, or a label. Since this component is a simple impurity of the recovered product, it is preferable to remove this component in advance before recycling from the resin mixture. The insoluble component is a component that is not melted in the melting/discharging unit 20 and is mixed as a solid in a discharged matter, and examples thereof include paper such as a label, and various inorganic substances for forming a plating or a coating layer. In the separation unit, a method of removing the insoluble component is not particularly limited, and the following method can be suitably exemplified. For example, a fluid obtained by heating the resin mixture to a temperature at which all the polymers contained in the resin mixture are melted such that all the polymers are fluidized is subjected to solid-liquid separation such as filtration, whereby the insoluble component can be removed. Note that, when the insoluble component accumulates in the separation unit 30, the discharged matter loses fluidity and stays in the separation unit. Therefore, it is preferable to adjust the amount of a molten polymer to such an extent that the discharged matter maintains fluidity that makes transfer of the discharged matter possible (makes a separation treatment possible) in the separation unit. As the separation unit, a unit capable of removing or separating the insoluble component can be applied without particular limitation, and examples thereof include a continuous solid-liquid separator capable of performing filtration at a large differential pressure using a sintered alloy filter excellent in heat resistance and pressure resistance. The "differential pressure" at this time may be any pressure difference that removes the insoluble component from the discharged matter between both surfaces of the separation film (sintered alloy filter), and can be appropriately set in consideration of the kind or content of a component contained in the discharged matter, the viscosity of the discharged matter, and the like.

A preferable separation unit 30 applicable to the separation and recovery apparatus 1 is a solid-liquid separator having the following configuration. As illustrated in FIG. 3, the separation unit 30 includes a tubular body 31 having a substantially circular cross section. In addition, the separation unit 30 includes: at one end of the tubular body 31, an inlet 32 through which a fluid (discharged matter) discharged from the melting/discharging unit 20 flows into the tubular body 31; a first flow path 33 which is connected to the inlet 32 and extends in a longitudinal direction of the tubular body 31 and in which the fluid flowing in from the inlet 32 flows at a high pressure; and an insoluble component discharge port 34 that extends from a downstream side end of the first flow path 33 (is connected to the other end of the tubular body 31) and discharges an insoluble component separated from the fluid. That is, the inlet 32 and the insoluble component discharge port 34 are connected to the ends of the tubular body 31 (the first flow path 33), respectively.

The separation unit 30 further includes: a tubular separation film 35 that is disposed inside the tubular body 31 so as to surround an outer peripheral surface of the first flow path 33 along the first flow path 33 and separates an insoluble component mixed in a fluid flowing in the first flow path 33 from the fluid; a second flow path 36 which is defined (disposed) in a tubular shape extending in the longitudinal direction of the tubular body 31 on an outer peripheral side of the separation film 35 (a side opposite to the first flow path 33 with respect to the separation film 35) and in which the fluid which has passed through the separation film 35 and from which an insoluble component has been removed flows; and a fluid outlet 37 which is connected to the second flow path 36 and from which the fluid from which the insoluble component has been removed flows out. That is, the tubular body 31 has a double tube structure in which an internal space is divided by the separation film 35 into the first flow path (inner flow path) 33 defined inside the separation film 35 and the second flow path (outer flow path) 36 defined outside the separation film 35.

The separation unit 30 has a double tube structure in which the first flow path 33 is an inner flow path and the second flow path 36 is an outer flow path. However, in the present invention, the separation unit 30 can have a double tube structure in which the first flow path 33 is an outer flow path and the second flow path 36 is an inner flow path. That is, in the separation and recovery apparatus of the present invention, the separation film of the separation unit can be disposed along the inside or the outside of the first flow path. Note that when the first flow path 33 is an outer flow path, the inlet, the fluid outlet, and the insoluble component discharge port are formed at positions where the functions thereof are exhibited, respectively.

The separation film 35 is a film that separates and transmits a molten component, usually a polymer and the like in the fluid flowing in the first flow path 33 to the second flow path 36, and for example, a porous sintered alloy pipe, a ceramic pipe, or the like can be used.

The separation unit 30 may include a heating mechanism for maintaining a molten state of the discharged matter on an outer periphery of the tubular body 31. A heating temperature of the tubular body 31 is not particularly limited, and can be set to a heating temperature in the melting/discharging unit 20. In addition, the separation unit 30 can also include a mixer (static mixer) or the like capable of stirring the fluid in the first flow path 33 in the first flow path 33.

An operation of the separation unit 30 will be described.

A fluid (discharged matter) flowing in at a high pressure from the inlet 32 while maintaining a molten state flows in the first flow path 33 toward the insoluble component discharge port 34 while maintaining the molten state and the discharge pressure in the melting/discharging unit 20. At this time, the discharge pressure acts in the first flow path 33. Meanwhile, the fluid outlet 37 is controlled by a valve disposed in the outlet 37 so as to have a lower pressure than the first flow path. This causes a pressure difference between the first flow path 33 and the second flow path 36. Due to this pressure difference, the molten component constituting the discharged matter passes through the separation film 35 and flows into the second flow path 36, and the insoluble component cannot pass through the separation film 35, remains in the first flow path 33, and flows toward the insoluble component discharge port 34. The molten component flowing into the second flow path 36 is discharged from the fluid outlet 37 and transferred to a next unit, the hydrothermal reaction treatment unit 50 in this embodiment. Meanwhile, the insoluble component flowing in the first flow path 33 is discharged from the insoluble component discharge port 34. Here, since the insoluble component is usually present in the first flow path 33 in a solid state, it is difficult for the insoluble component to move quickly.

Therefore, preferably, a part of the molten component is left in the first flow path 33 without passing through the separation film 35, and the insoluble component is transferred and discharged from the insoluble component discharge port 34 together with the molten component. In order to leave a part of the molten component, for example, setting can be appropriately performed by a pressure difference between the first flow path 33 and the second flow path 36, the hole diameter or thickness of the separation film 35, an opening balance of a valve when the valve is attached to each of the insoluble component discharge port 34 and the fluid outlet 37, and the like. Note that the amount of the molten component to be left is preferably a minimum amount required to transfer the insoluble component to the insoluble component discharge port 34 from a viewpoint of suppressing a significant decrease in recycling efficiency.

In this way, in the fluid transferred to the separation unit 30, the molten component containing the polymers A and B can be separated from the insoluble component, and the molten component from which the insoluble component has been removed can be transferred to a next unit. This makes it possible to separate and recover the high-purity hydrolytic component a and nonhydrolyzable polymer B, which do not contain impurities derived from an insoluble component, with higher recycling efficiency.

### (Hydrothermal reaction treatment unit)

In the separation and recovery apparatus 1, the hydrothermal reaction treatment unit 50 is a unit that subjects a molten component obtained by subjecting a fluid discharged from the melting/discharging unit 20 to a separation treatment in the separation unit 30, that is, a molten component from which an insoluble component has been removed, obtained in the separation unit 30, to a hydrothermal reaction treatment. By supplying the fluid as a molten component to the hydrothermal reaction treatment unit 50, a hydrolysis reaction of the hydrolyzable polymer A and separation of the nonhydrolyzable polymer B from the reaction system (hydrolytic component a) can be rapidly progressed, and high recycling efficiency can be achieved.

The hydrothermal reaction treatment unit 50 can hydrolyze the hydrolyzable polymer A among the polymers contained in the molten component transferred from the separation unit 30 by bringing the hydrolyzable polymer A into contact with water under high temperature and high pressure conditions, dissolve and transfer the hydrolytic component a into water permeating the diaphragm 55, and separate the nonhydrolyzable polymer B contained in the molten component.

The hydrothermal reaction treatment unit 50 may be any unit as long as the fluid (molten component) can be subjected to a hydrothermal reaction treatment under hydrothermal reaction treatment conditions described later, and an appropriate treatment apparatus, for example, a sealed reaction container such as an autoclave or a reaction tube is selected. In the present invention, an apparatus capable of continuous hydrothermal reaction treatment is preferable, and specifically, a unit including a diaphragm (separation film such as a porous film) that is water-permeable and blocks passage of a molten polymer is preferable. As the diaphragm, it is possible to select an appropriate medium which a high-viscosity resin does not permeate and water easily permeates. This makes it possible to individually control a flow rate of the molten component (polymer) and a flow rate of water, and therefore it is possible to prevent a disadvantage such as a decrease in purity due to exposure of the hydrolytic component a that has passed through the diaphragm to a high temperature for a long time. Examples of such a preferable hydrothermal reaction treatment unit include a partition wall contact type hydrothermal reaction treatment unit (a unit having a double tube structure, a unit having a two-layer wall structure, or the like) and a countercurrent contact type hydrothermal reaction treatment unit.

Since the hydrothermal reaction treatment unit 50 hydrolyzes the hydrolyzable polymer, the fluid flowing into the hydrothermal reaction treatment unit 50 is a fluid having a large content of the hydrolyzable polymer A among the fluids obtained in the units disposed on an upstream side. For example, when a concentration unit 40 described later is disposed on an upstream side, the fluid is not a fluid containing the nonhydrolyzable polymer B as a main component but a fluid containing the hydrolyzable polymer A as a main component.

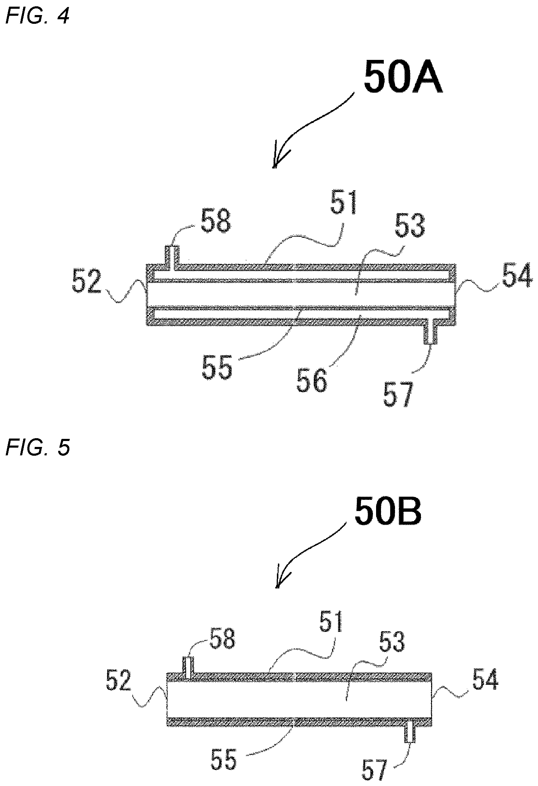

One preferable embodiment of the hydrothermal reaction treatment unit applicable to the separation and recovery apparatus 1 is a partition wall contact type hydrothermal reaction treatment unit 50A having the following configuration and having a double tube structure. As illustrated in FIG. 4, the unit 50A includes a tubular body 51 having a substantially circular cross section. In addition, the unit 50A includes: at one end of the tubular body 51, an inlet 52 through which a fluid (a molten component, preferably a fluid maintaining a molten state) discharged from the separation unit 30 and containing the hydrolyzable polymer A flows into the tubular body 51; a first flow path 53 which is connected to the inlet 52 and extends in a longitudinal direction of the tubular body 51 and in which the fluid flowing in from the inlet 52 flows; and a residue outlet 54 which extends from a downstream side end of the first flow path 53 (is connected to the other end of the tubular body 51) and from which a residue of the fluid that has been subjected to a hydrothermal reaction treatment flows out. That is, the inlet 52 and the residue outlet 54 are connected to the ends of the tubular body 51 (the first flow path 53), respectively.

The partition wall contact type hydrothermal reaction treatment unit 50A further includes: a tubular diaphragm 55 that is disposed inside the tubular body 51 so as to surround an outer peripheral surface of the first flow path 53 along the first flow path 53, is water-permeable, and blocks passage of a molten polymer; a second flow path 56 which is tubular, extends in a longitudinal direction of the tubular body 51 on an outer peripheral side of the diaphragm 55 (a side opposite to the first flow path 53 with respect to the diaphragm 55), is disposed adjacent to the first flow path 53 via the diaphragm 55, and in which water or a water mixture (aqueous phase) containing the hydrolytic component a that has passed through the diaphragm 55 flows; a water inlet 57 which is formed in the second flow path 56 and through which water flows into the second flow path; and a water mixture outlet 58 which is formed in the second flow path 56 and through which the water mixture containing the hydrolytic component a of the hydrolyzable polymer A, which has flowed in from the water inlet 57 and passed through the diaphragm 55 while flowing in the second flow path 56, flows out from the second flow path 56 (to the outside thereof). That is, the tubular body 51 has a double tube structure in which an internal space is divided by the diaphragm 55 into the first flow path (inner flow path) 53 defined inside the diaphragm 55 and the second flow path (outer flow path) 56 defined outside the diaphragm 55. The diaphragm 55 separates the hydrolytic component a in the molten component flowing in the first flow path 53 from the molten component and transfers the hydrolytic component a to the second flow path 56. The diaphragm 55 is set so as to be able to maintain hydrothermal reaction treatment conditions in the second flow path 56, particularly a pressure, and for example, when the diaphragm 55 is a porous film, the pressure can be appropriately set according to an opening diameter, a porosity, and the like. The pressure of water at this time is set to a pressure lower than the pressure of the fluid. Specifically, the pressure of water is set to a pressure higher than a saturated vapor pressure of water at a temperature of the hottest part of the entire apparatus and lower than a minimum pressure when the pressure of the fluid fluctuates for some reason. As for a pressure difference between the fluid and water, in view of necessity of keeping the fluid in the diaphragm 55, a preliminary study using a diaphragm made of the same material is performed, and the pressure difference is set such that the fluid does not directly leak out to the second flow path 56 through the diaphragm 55. The pressure of water can be adjusted, for example, by disposing a water supply high-pressure pump and a back pressure valve used for pressure control at a preceding stage and a subsequent stage of the second flow path 56. Although not particularly limited, the water inlet 57 is preferably formed on a downstream side of the tubular body 51 and the water mixture outlet 58 is preferably formed on an upstream side of the tubular body 51.

The partition wall contact type hydrothermal reaction treatment unit 50A has a double tube structure in which the first flow path 53 is an inner flow path and the second flow path 56 is an outer flow path. However, in the present invention, the partition wall contact type hydrothermal reaction treatment unit 50A can have a double tube structure in which the first flow path 53 is an outer flow path and the second flow path 56 is an inner flow path. That is, in the separation and recovery apparatus of the present invention, the diaphragm of the hydrothermal reaction treatment unit can be disposed along the inside or the outside of the first flow path. Note that when the first flow path 53 is an outer flow path, the inlet, the residue outlet, the water inlet, and the water mixture outlet are formed at positions where the functions thereof are exhibited, respectively.

In the partition wall contact type hydrothermal reaction treatment unit 50A, a state of water supplied from the water inlet 57 to the second flow path 56 is not particularly limited, and water not satisfying the hydrothermal reaction treatment conditions may be used, but water satisfying the hydrothermal reaction treatment conditions is preferable. In this case, it is preferable to dispose a known pressure heating apparatus on an upstream side of the water inlet 57. As illustrated in FIG. 1, the separation and recovery apparatus 1 includes a circulating water reheating unit 60C. Note that, when water not satisfying the hydrothermal reaction treatment conditions is supplied to the second flow path 56, water flowing in the second flow path 56 can be heated by a heating mechanism disposed on an outer periphery of the tubular body 51, described later, to convert the water into water satisfying the hydrothermal reaction treatment conditions. At this time, it is necessary that the fluid in the first flow path 53 is not cooled and solidified by a temperature of the flowing water.

The diaphragm 55 is a film that can transmit water flowing in the second flow path 56 to the first flow path 53 and cannot transmit a molten component due to a high viscosity of the fluid. For example, a porous sintered alloy pipe, a ceramic pipe, or the like can be used.

The partition wall contact type hydrothermal reaction treatment unit 50A may include a heating mechanism for maintaining a hydrothermal reaction treatment temperature on an outer periphery of the tubular body 51. A heating temperature of the tubular body 51 is not particularly limited, and is set to a hydrothermal reaction treatment temperature described later.

Although not illustrated, in the separation and recovery apparatus 1, for example, by disposing a valve for pressure holding at a most downstream discharge port, the fluid flowing in the units is transferred from the melting/discharging unit to a downstream unit while gradually reducing a pressure as described above. Meanwhile, the pressure of water flowing into the partition wall contact type hydrothermal reaction treatment unit 50A can be ensured by disposing a pump and a back pressure valve (not illustrated) separately from a fluid supply line. In addition, a heater (not illustrated) for heating water can be disposed outside the partition wall contact type hydrothermal reaction treatment unit 50A to adjust the temperature. In this way, hydrothermal reaction treatment conditions (in particular, pressure and temperature) described later in the partition wall contact type hydrothermal reaction treatment unit 50A can be achieved.

An operation of the partition wall contact type hydrothermal reaction treatment unit 50A will be described.

The fluid flowing in from the inlet 52 flows in the first flow path 53 toward the residue outlet 54 while maintaining a molten state. At this time, the inside of the first flow path 53 is under hydrothermal reaction treatment conditions described later, and the fluid is brought into contact with water permeating the diaphragm 55 to be placed under a hydrothermal reaction treatment environment. The hydrolyzable polymer A contained in the fluid undergoes a hydrolysis reaction to generate the hydrolytic component a thereof, and the hydrolytic component a is dissolved and transferred into water (aqueous phase) permeating the diaphragm 55. Then, due to a concentration gradient of the hydrolytic component a, the hydrolytic component a dissolved in the water penetrating the diaphragm 55 is transferred into water flowing in the second flow path 56. Meanwhile, the nonhydrolyzable polymer B contained in the fluid cannot pass through the diaphragm 55 because the nonhydrolyzable polymer B maintains a high viscosity without undergoing a hydrolysis reaction, stays in the first flow path 53 in a molten state, and flows toward the residue outlet 54.

In this way, among the molten components transferred to the partition wall contact type hydrothermal reaction treatment unit 50A, the hydrolytic component a is mixed with water flowing in the second flow path 56 and discharged from the water mixture outlet 58, and the nonhydrolyzable polymer B is discharged from the residue outlet 54. As a result, the hydrolyzable polymer A (hydrolytic component a thereof) and the nonhydrolyzable polymer B can be separated and recovered (hybrid recycling).

Another preferable embodiment of the hydrothermal reaction treatment unit applicable to the separation and recovery apparatus of the present invention including the separation and recovery apparatus 1 is a partition wall contact type hydrothermal reaction treatment unit 50B having the following configuration and having a two-layer wall structure.

As illustrated in FIG. 5, the unit 50B includes a tubular body 51 having a substantially circular cross section. In addition, the unit 50B includes: at one end of the tubular body 51, an inlet 52 through which a fluid (a molten component, preferably a fluid maintaining a molten state) discharged from the separation unit 30 and containing the hydrolyzable polymer A flows into the tubular body 51; a first flow path 53 which is connected to the inlet 52 and extends in a longitudinal direction of the tubular body 51 and in which the fluid flowing in from the inlet 52 flows; and a residue outlet 54 which extends from a downstream side end of the first flow path 53 (is connected to the other end of the tubular body 51) and from which a residue of the fluid that has been subjected to a hydrothermal reaction treatment flows out. That is, the inlet 52 and the residue outlet 54 are connected to the ends of the tubular body 51 (the first flow path 53), respectively.

The partition wall contact type hydrothermal reaction treatment unit 50B further includes: a tubular diaphragm 55 disposed inside the tubular body 51 in contact with an inner peripheral surface of the tubular body 51 and surrounding an outer peripheral surface of the first flow path 53; a water inlet 57 which is formed in contact with the diaphragm 55 and through which water flows into the diaphragm; and a water mixture outlet 58 which is formed in contact with the diaphragm 55 and through which a water mixture containing the hydrolytic component a of the hydrolyzable polymer A that has passed through the diaphragm 55 flows out from the diaphragm 55 (to the outside thereof). The diaphragm 55 is a porous film which is water-permeable and blocks passage of a molten polymer and in which a water mixture (aqueous phase) containing the hydrolytic component a that has entered the diaphragm 55 can flow. Water flowing in the diaphragm 55 is under the hydrothermal reaction treatment conditions, and similarly to the diaphragm contact type hydrothermal reaction treatment unit 50A, a state of the water is maintained by a pump, a back pressure valve, a heater, and the like disposed outside. Although not particularly limited, the water inlet 57 is preferably formed on a downstream side of the tubular body 51 and the water mixture outlet 58 is preferably formed on an upstream side of the tubular body 51.

Components other than the above components are similar to those of the partition wall contact type hydrothermal reaction treatment unit 50A.

An operation of the partition wall contact type hydrothermal reaction treatment unit 50B is basically similar to that of the partition wall contact type hydrothermal reaction treatment unit 50A except that water (water mixture) in which the hydrolytic component is dissolved flows not in the second flow path but in the diaphragm 55.

Furthermore, still another preferable embodiment of the hydrothermal reaction treatment unit applicable to the separation and recovery apparatus of the present invention including the separation and recovery apparatus 1 is a countercurrent contact type hydrothermal reaction treatment unit 50C having the following configuration.

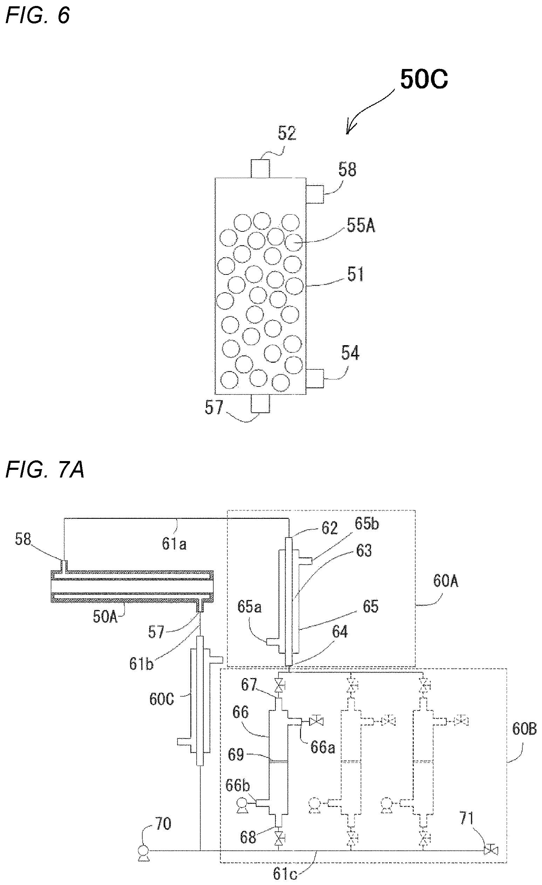

As illustrated in FIG. 6, the unit 50C includes a tubular body 51 having a substantially circular cross section, and the tubular body 51 is disposed vertically. The tubular body 51 includes: at an upper end thereof, an inlet 52 through which a fluid (a molten component, preferably a fluid maintaining a molten state) discharged from the separation unit 30 and containing the hydrolyzable polymer A flows into the tubular body 51; a water mixture discharge port 58 formed at an upper portion of the tubular body 51; a residue discharge port 54 formed at a lower portion of the tubular body 51; and a water inlet 57 formed at a lower end of the tubular body 51. The inlet 52, the residue discharge port 54, the water inlet 57 and the water mixture discharge port 58 are connected to an internal space of the tubular body 51. The internal space of the tubular body 51 is filled with a filler 55A. The fluid flows down on a surface of the filler 55A and water flows on a surface of the fluid, whereby a large contact area can be ensured.

The unit 50C performs the hydrothermal reaction treatment while allowing the fluid discharged from the separation unit 30 to flow in from the inlet 52 and allowing water to flow in from the water inlet 57, whereby the hydrolytic component a permeates the filler 55A and is separated from the nonhydrolyzable polymer B. As a result, the hydrolyzable polymer A (hydrolytic component a thereof) and the nonhydrolyzable polymer B can be separated and recovered (hybrid recycling).

The fluid after the hydrothermal reaction treatment is discharged from the residue discharge port 54, and the water mixture is discharged from the water mixture discharge port 58. An operation method of the unit 50C can be applied to a case where the specific gravity of the fluid under the hydrothermal treatment conditions is larger than that of water. When the specific gravity of water is larger than that of the fluid, a similar effect can be obtained by reversing the arrangement of the inlet, the discharge port, and the like.

The filler 55A used in the unit 50C is formed of a material similar to that of the diaphragm 55 that is water-permeable, can transmit water, and does not transmit a molten component.

The hydrothermal reaction treatment conditions in the hydrothermal reaction treatment unit 50 are appropriately set.

The hydrothermal reaction treatment can be continuously performed while the fluid is transferred (continuous hydrothermal reaction treatment), and for example, in the partition wall contact type hydrothermal reaction treatment unit 50A, the hydrothermal reaction treatment can be continuously performed while the fluid is transferred to the first flow path 53.

In the present invention, one hydrothermal reaction treatment unit may be included, or two or more hydrothermal reaction treatment units may be included. The two or more hydrothermal reaction treatment units may be units that perform the hydrothermal reaction treatment under the same conditions, or may be units that perform the hydrothermal reaction treatment under different same conditions. The plurality of hydrothermal treatment units may be arranged and connected in series to be able to perform the continuous hydrothermal reaction treatment, or may be arranged and connected in parallel to be able to simultaneously perform the hydrothermal reaction treatment.

In particular, when the fluid discharged from the separation unit 30 and supplied to the hydrothermal reaction treatment unit 50 contains a plurality of polymers (hydrolyzable polymers A), the hydrothermal reaction treatment units as many as the number of kinds of the polymers A are connected in series, and the hydrothermal reaction treatment is performed in a plurality of stages from a low temperature to a high temperature, whereby the hydrolytic component a can be recovered from the plurality of polymers A simultaneously.

### (Hydrolytic component recovery unit)

The separation and recovery apparatus 1 includes a hydrolytic component recovery unit 60 that recovers the hydrolytic component a of the hydrolyzable polymer A from the water mixture at a subsequent stage of the hydrothermal reaction treatment unit 50. The hydrolytic component recovery unit 60 can be applied to a component whose solubility largely changes depending on temperature among the hydrolytic components, and can precipitate the hydrolytic component by minimum cooling and can recover the hydrolytic component by solid-liquid separation. In addition, as illustrated in FIG. 1, the hydrolytic component recovery unit 60 is preferable from a viewpoint that water itself can also be reused when a hydrothermal treatment unit and a circulation path are constructed. In a preferred embodiment in which water is reused, it is possible to reduce the amount of water used and energy required for reheating.

The hydrolytic component recovery unit includes a cooling and precipitating subunit 60A that cools the water mixture to precipitate a hydrolytic component, and a solid-liquid separation subunit 60B that separates the precipitated hydrolytic component from water. The cooling and precipitating subunit 60A may be any unit as long as it can cool the water mixture, and a unit that is usually used can be used without particular limitation. Examples thereof include a unit that includes a flow path in which the water mixture flows or a container that stores the water mixture and air-cools the flow path or the container, and a unit including a cooler (for example, a water-cooling jacket) around the flow path or the container. FIG. 1 illustrates a unit including a tubular flow path and a cooler surrounding the flow path.

As the solid-liquid separation subunit, a unit usually used can be used without particular limitation, and examples thereof include a filter. In the hydrolytic component recovery unit, the cooling and precipitating subunit and the solid-liquid separation subunit may be formed integrally or separately.

As illustrated in FIGS. 1 and 7A, the hydrolytic component recovery unit 60 in the separation and recovery apparatus 1 includes the tubular cooling and precipitating subunit 60A and the tubular solid-liquid separation subunit 60B connected to a downstream side of the cooling and precipitating subunit 60A.

The cooling and precipitating subunit 60A includes: an inlet 62 to which a transfer pipe 61a extending from the water mixture outlet 58 of the hydrothermal reaction treatment unit 50 is connected and into which the water mixture containing the hydrolytic component a flows; a flow path 63 (also referred to as a flow path A) which is connected to the inlet 62 and in which the water mixture flowing from the inlet 62 flows; and an outlet 64 which is connected to the flow path 63 and from which the (precipitated) hydrolytic component a flows out together with water. The cooling and precipitating subunit 60A further includes: a cooling jacket 65 surrounding an outer peripheral surface of the flow path 63; a cooling water inlet portion 65a which is connected to the outlet 64 side of the cooling jacket 65 and through which cooling water flows into the cooling jacket 65; a cooling water discharge portion 65b which is connected to the inlet 62 side of the cooling jacket 65 and through which the cooling water is discharged from the cooling jacket 65; and a cooling water transfer portion (a cooling water storage tank, a pump for transferring the cooling water, and the like) (not illustrated). As a result, the water mixture flowing in the flow path 63 can be cooled to precipitate a hydrolytic component.

Note that the transfer pipe 61a may include a heating mechanism on an outer peripheral surface thereof to maintain the temperature of the water mixture.

The solid-liquid separation subunit 60B is constituted by a separator connected to the cooling and precipitating subunit 60A (specifically, the outlet 64). Specifically, the solid-liquid separation subunit 60B includes: a tubular body 66; a connection port 67 formed at an upstream side end of the body 66 and connected to the outlet 64; and an outlet 68 which is formed at a downstream side end of the body 66 and from which water after solid-liquid separation flows out. Furthermore, the body 66 includes: a disk-shaped filtration film 69; a transfer pipe 61c extending from the outlet 68 and connected to a reheating subunit 60C described later; and a transfer pipe 61b connecting the reheating subunit 60C to the inlet 57 of the hydrothermal reaction treatment unit 50. As illustrated in FIGS. 1 and 7A, the solid-liquid separation subunit 60B is connected to the partition wall contact type hydrothermal reaction treatment unit 50A and the cooling and precipitating subunit 60A disposed on an upstream side together with the reheating subunit 60C disposed on a downstream side by the transfer pipes 61a, 61c, and 61b to form a circulation path in which water flows. As a result, water separated from the hydrolytic component a can be used in a circulated manner. Circulating water heated by the reheating subunit 60C has a small specific gravity, and therefore generates a flow toward an upper side (the inlet 57 side of the partition wall contact type hydrothermal reaction treatment unit 50A in FIGS. 1 and 7A), and circulating water cooled by the cooling and precipitating subunit 60A generates a flow toward a lower side (the inlet 67 side of the solid-liquid separation subunit 60B in FIGS. 1 and 7A). As a result, it is possible to create a flow in which water circulates in the circulation path as a whole without disposing a mechanism such as a pump.

The circulation path preferably includes a constant pressure pump 70 for adding water and a back pressure valve 71 for discharging excessive water in order to suppress a change in density caused by water consumed by hydrolysis or cooling and heating, and a change in pressure in the circulation path due to the change.

An outer edge of the filtration film 69 is in contact with an inner surface of the body 66, and divides an internal space of the body 66 into two in an axial direction of the body 66. A discharge portion 66a for discharging a precipitated hydrolytic component is disposed in the internal space defined on an upstream side, and a backwashing water introduction portion 66b for introducing water for backwashing the filtration film 69 is connected to the internal space defined on a downstream side. As the filtration film 69, a porous film made of a metal or a heat-resistant resin, a sintered alloy filter, or the like can be used. In the solid-liquid separation subunit 60B, the hydrolytic component precipitated in the cooling and precipitating subunit 60A and water (water mixture) flow into the body 66 from the connection port 67, and the water passes through the filtration film 69, while the hydrolytic component a is deposited on the filtration film 69. In this way, the hydrolytic component a can be separated (filtered) from water, taken out from the discharge portion 66a together with the backwashing water introduced from the backwashing water introduction portion 66b, and recovered.

In the present invention, one hydrolytic component recovery unit 60 may be included, or two or more hydrolytic component recovery units 60 may be included. When two or more hydrolytic component recovery units 60 are included, the plurality of units may be arranged and connected in series or in parallel.

When the separation and recovery apparatus 1 includes a plurality of hydrothermal reaction treatment units 50, one hydrolytic component recovery unit 60 is preferably disposed in each of the hydrothermal reaction treatment unit 50.

The hydrolytic component recovery unit 60 preferably includes at least one cooling and precipitating subunit 60A and at least one solid-liquid separation subunit 60B, and may include two or more cooling and precipitating subunits 60A and/or two or more solid-liquid separation subunits 60B. As illustrated by broken lines in FIGS. 1 and 7A, the separation and recovery apparatus 1 includes three solid-liquid separation subunits 60B connected and arranged in parallel to one cooling and precipitating subunit 60A, and all the three solid-liquid separation subunits 60B are incorporated in the circulation path, and by alternately operating the three solid-liquid separation subunits 60B, a state in which solid-liquid separation can be continuously performed is achieved.

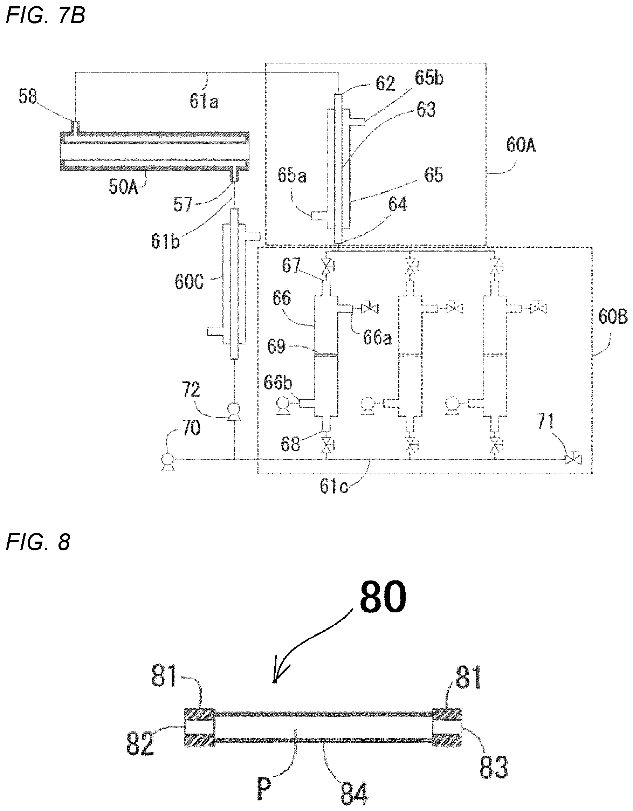

For example, in a case where it is desired to further increase a flow rate of the circulating water using the difference in specific gravity, it is also possible to forcibly allow water to flow by disposing a circulation pump 72 in the middle of the transfer path 61c as illustrated in FIG. 7B.

### (Circulating water reheating unit)

The separation and recovery apparatus 1 includes the circulating water reheating unit 60C that is incorporated in the circulation path and heats circulating water to be supplied to the hydrothermal reaction treatment unit 50A. The circulating water reheating unit 60C may be any unit as long as it can heat water, and a unit that is usually used can be used without particular limitation. For example, the circulating water reheating unit 60C can have a configuration similar to the cooling and precipitating subunit 60A except that the circulating water reheating unit 60C includes a heater instead of the cooler. Here, the circulating water reheating unit 60C has been described as an independent unit, but as illustrated in FIG. 1, in the separation and recovery apparatus 1, the circulating water reheating unit 60C constitutes a hydrolytic component recovery unit (the same applies to separation and recovery apparatuses 2 to 4).

### (Polymer B recovery unit)

The separation and recovery apparatus 1 includes the polymer B recovery unit 80 that is disposed in parallel to the hydrolytic component recovery unit 60 and recovers the nonhydrolyzable polymer B separated from an aqueous phase at a subsequent stage of the hydrothermal reaction treatment unit 50.

A fluid in which the hydrolyzable polymer A has been extracted into water as the hydrolytic component a by the hydrothermal reaction treatment unit 50A is a fluid containing the nonhydrolyzable polymer B as a main component. This fluid is solidified when cooled, and therefore is preferably discharged under reduced pressure while a high temperature is maintained. Specifically, a back pressure is applied to the fluid by a back pressure valve, a needle valve, or the like corresponding to a high temperature. In addition, by causing the fluid to pass through a sintered alloy tube or the like opened to the atmosphere, it is also possible to evaporate and remove water that is expected to be slightly mixed, a decomposition product a that has not been extracted, and the like.

As illustrated in FIG. 8, the polymer B recovery unit 80 includes: a tubular body 81 that forms both ends of the tubular polymer B recovery unit 80; a residue inlet 82 which is formed in the tubular body 81 on an upstream side and into which a residue (a fluid containing the nonhydrolyzable polymer B) obtained in the hydrothermal reaction treatment unit 50A flows; a flow path P which is connected to the residue inlet 82 and in which the residue flowing in from the residue inlet 82 flows; a removal film 84 that is disposed along the flow path P and removes water and the hydrolytic component a remaining in the residue; and an outlet 83 which is connected to the tubular body 81 on a downstream side (on a downstream side of the removal film 84 in the flow path P) and through which the nonhydrolyzable polymer B from which the remaining water and hydrolytic component a have been removed flows out. As the removal film 84, a pipe formed of sintered metal in a tubular shape surrounding an outer peripheral surface thereof along the flow path P is adopted.

The polymer B recovery unit 80 can recover the hydrolyzable polymer A, and can further recover the high-purity nonhydrolyzable polymer B from which the hydrolytic component a has been removed.

As described above, using a resin mixture such as resin waste as a raw material, the separation and recovery apparatus 1 having the above configuration can separately and continuously recover the hydrolyzable polymer A constituting the resin mixture as the hydrolytic component a which is a raw material compound thereof, and the nonhydrolyzable polymer B as a high-purity polymer in which mixing of the hydrolyzable polymer and the hydrolytic component thereof is suppressed.

In the separation and recovery apparatus 1, the separation unit 30 described above can be interposed between the hydrothermal reaction treatment unit 50A and the polymer B recovery unit 80, whereby an insoluble component remaining in the nonhydrolyzable polymer B can be highly removed.

### <Another preferred separation and recovery apparatus of the present invention>

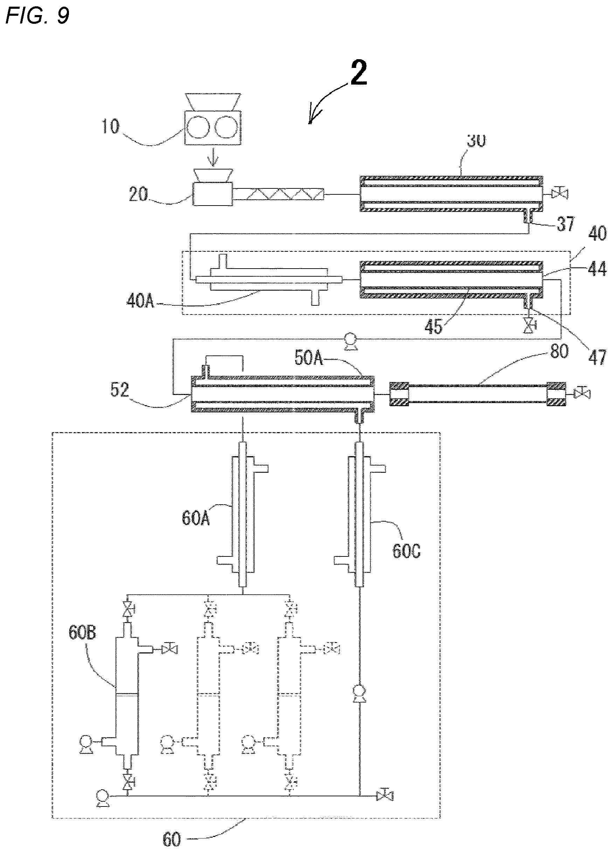

As illustrated in FIG. 9, a separation and recovery apparatus 2 which is another preferred embodiment of the present invention includes a crushing unit 10, a melting/discharging unit 20, a separation unit 30, a concentration unit 40, a hydrothermal reaction treatment unit 50A, a hydrolytic component recovery unit 60, and a polymer B recovery unit 80. The concentration unit 40 and the hydrothermal reaction treatment unit 50A are connected to each other by a transfer pipe through which a fluid flowing out from the concentration unit 30 is transferred while maintaining a molten state. The separation and recovery apparatus 2 has the same configuration as the separation and recovery apparatus 1 except that the separation and recovery apparatus 2 includes the concentration unit 40 at a preceding stage of the hydrothermal reaction treatment unit 50A and a subsequent stage of the separation unit 30.

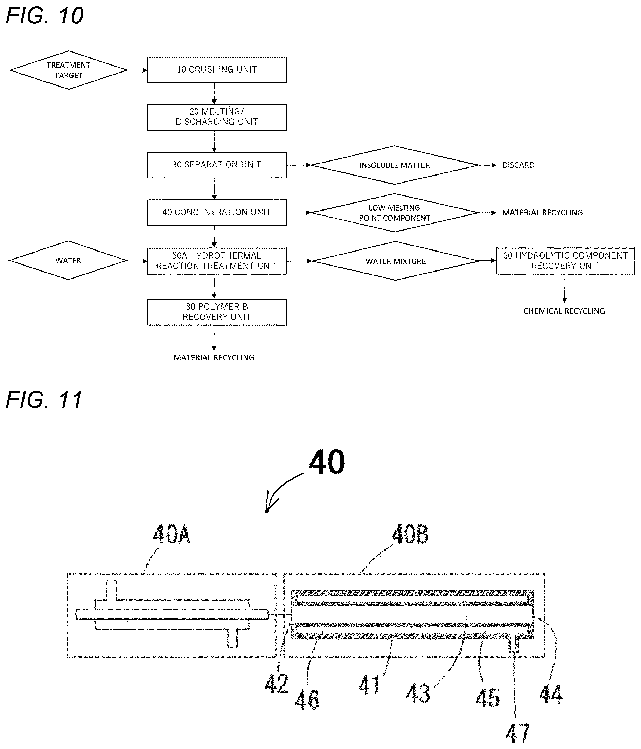

The separation and recovery apparatus 2 can execute a series of treatment processes illustrated in FIG. 10, and can obtain a workpiece obtained by each unit illustrated in FIG. 10. The nonhydrolyzable polymer B can be separated and recovered in the concentration unit 40 and the polymer B recovery unit 80, and the hydrolytic component a of the hydrolyzable polymer A can be recovered in the hydrolytic component recovery unit 60. In this way, the hydrolytic component a of the hydrolyzable polymer A and the nonhydrolyzable polymer B can be continuously recovered and continuously hybrid-recycled.

The resin mixture used in the separation and recovery apparatus 2 is as described above, but for example, a resin mixture containing one kind of hydrolyzable polymer A and one kind of nonhydrolyzable polymer B, in which a melting point MTA of the hydrolyzable polymer A is higher than a melting point MTB of the nonhydrolyzable polymer B, is preferable.

The units other than the concentration unit included in the separation and recovery apparatus 2 are the same as the units of the separation and recovery apparatus 1, and thus, description thereof is omitted.

### (Concentration unit)

The concentration unit 40 is disposed between the separation unit 30 and the hydrothermal reaction treatment unit 50A, and separates the nonhydrolyzable polymer B to increase the content of the hydrolyzable polymer A in a fluid transferred to the hydrothermal reaction treatment unit 50A. The concentration unit 40 cools a fluid (discharged matter) from which an insoluble component has been removed in the separation unit 30, and preferentially solidifies a high melting point component (preferably the hydrolyzable polymer A). This is subjected to solid-liquid separation such as filtration, whereby the high melting point component and a low melting point component (preferably the nonhydrolyzable polymer B) can be separated from each other based on a difference in melting point between the polymers to increase a concentration of the high melting point component (concentrate the high melting point component).

A cooling temperature cannot be uniquely determined depending on the kind of polymer, but can be set between the melting point MTA of the hydrolyzable polymer A and the melting point MTB of the nonhydrolyzable polymer B.

The separation and recovery apparatus 2 includes a plurality of concentration units 40, and the cooling temperatures in the concentration units are changed according to a melting point of each polymer, whereby different nonhydrolyzable polymers can be separated and recovered in the following concentration units. Therefore, when the resin mixture contains a plurality of kinds of nonhydrolyzable polymers B, by disposing the same number of concentration units as the number of kinds of polymers B and setting the cooling temperature of each unit to a temperature at which solidification or melting of each polymer is adjusted with reference to a melting point of each of the polymers B and a melting point of the hydrolyzable polymer A, different kinds of nonhydrolyzable polymers B can be recovered depending on a unit. The embodiment including the plurality of concentration units 40 will be specifically described in further still another preferred separation and recovery apparatus of the present invention.

As illustrated in FIGS. 9 and 11, the concentration unit 40 suitable for the separation and recovery apparatus 2 includes: a cooling subunit 40A that precipitates and solidifies a part of polymers by cooling a fluid transferred from a unit (for example, a melting/discharging unit or a separation unit) disposed on an upstream side; and a removal subunit 40B that is connected to the cooling subunit 40A and removes the precipitated and solidified polymer.

The cooling subunit 40A cools the transferred fluid to precipitate and solidify a polymer having a high melting point among the polymers and converts the fluid into a fluid containing the precipitated and solidified polymer as an insoluble matter. The cooling subunit 40A may have any structure as long as it can perform the above-described functions, and the separation and recovery apparatus 2 adopts the above-described cooling and precipitating subunit 60A.

The removal subunit 40B removes the polymer precipitated and solidified from the fluid transferred from the cooling subunit 40A as impurities, and transfers the fluid from which the precipitated and solidified polymer has been removed to a next unit. The removal subunit 40B may have any structure as long as it can perform the above-described functions, and the separation and recovery apparatus 2 adopts the above-described separation unit 30. Specifically, as illustrated in FIGS. 9 and 11, the removal subunit 40B has a tubular body 41 having a substantially circular cross section. In addition, the removal subunit 40B includes: at one end of the tubular body 41, an inlet 42 through which a fluid transferred from the cooling subunit 40A flows into the tubular body 41; a first flow path 43 which is connected to the inlet 42 and extends in a longitudinal direction of the tubular body 41, and in which the fluid flowing in from the inlet 42 flows; and a discharge port 44 which extends from a downstream side end of the first flow path 43 (is connected to the other end of the tubular body 41) and from which a precipitated and solidified polymer separated from the fluid is discharged.

The removal subunit 40B further includes: a tubular separation film 45 that is disposed inside the tubular body 41 along the first flow path 43 and separates a precipitated and solidified polymer mixed in a fluid flowing in the first flow path 43 from the fluid; a second flow path 46 which is defined (disposed) in a tubular shape extending in a longitudinal direction of the tubular body 41 on an outer peripheral side of the separation film 45 (a side opposite to the first flow path 43 with respect to the separation film 45) and in which the fluid which has passed through the separation film 45 and from which an insoluble component has been removed and separated flows; and a fluid outlet 47 which is connected to the second flow path 46 and from which the fluid from which the precipitated and solidified polymer has been removed flows out. That is, the tubular body 41 has a double tube structure in which an internal space is divided by the separation film 45 into the first flow path (inner flow path) 43 defined inside the separation film 45 and the second flow path (outer flow path) 46 defined outside the separation film 45.

Similarly to the separation unit 30, the removal subunit 40B may have a double tube structure in which the first flow path 43 is an outer flow path and the second flow path 46 is an inner flow path.

In the present invention, one concentration unit may be included singly as illustrated in FIG. 9, or two or more concentration units may be included depending on the kind of polymer contained in a fluid transferred to the concentration unit. The two or more concentration units are connected and arranged in series or in parallel.

A series of treatments in the separation and recovery apparatus 2 will be described.

In the separation and recovery apparatus 2, as in the separation and recovery apparatus 1, the resin mixture is sequentially applied to the crushing unit 10, the melting/discharging unit 20, and the separation unit 30. By transferring a fluid (molten component) flowing out from the fluid outlet 37 of the separation unit 30 to the cooling subunit 40A of the concentration unit 40 and cooling the fluid, a polymer as a high melting point component can be discharged as a solid from the discharge port 44 and recovered. Meanwhile, a polymer as a low melting point component passes through the separation film 45 in a molten state, is transferred to and flows in the second flow path, and flows out from the fluid outlet 47. The low melting point component flowing out from the fluid outlet 47 is supplied to the hydrothermal reaction treatment unit 50A as a next unit to subject the low melting point component to a hydrothermal reaction treatment. Note that the fluid transferred to the cooling subunit 40A and the removal subunit 40B maintains fluidity while containing the precipitated and solidified polymer in a dispersed state. The subsequent treatment is the same as that of the separation and recovery apparatus 1.

Using a resin mixture such as a resin waste as a raw material, the separation and recovery apparatus 2 can separately and continuously recover the hydrolyzable polymer A constituting the resin mixture as the hydrolytic component a which is a raw material compound thereof, and the nonhydrolyzable polymer B as a high-purity polymer in which mixing of the hydrolyzable polymer and the hydrolytic component thereof is suppressed.

In particular, since most of the nonhydrolyzable polymer B is separated and recovered from the hydrolyzable polymer A without being subjected to the hydrothermal reaction treatment in the concentration unit 40, the polymer B can avoid thermal history due to the hydrothermal reaction treatment, and deterioration of the characteristics of the polymer B can be further suppressed. In addition, the amount of a polymer supplied to the hydrothermal reaction treatment unit can be reduced, and load and energy of the hydrothermal reaction treatment unit can also be reduced. Furthermore, the polymer B can also be recovered in the hydrothermal reaction treatment unit 50A, and material recycling is possible depending on characteristics thereof.

### <Still another preferred separation and recovery apparatus of the present invention>

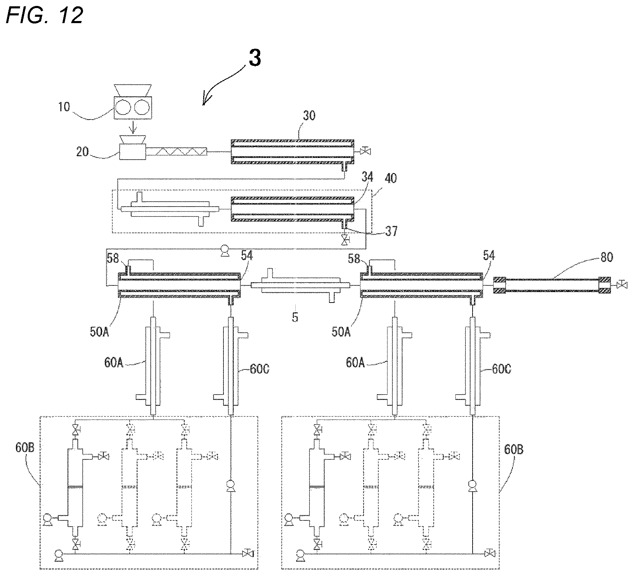

As illustrated in FIG. 12, a separation and recovery apparatus 3 according to still another preferred embodiment of the present invention is the same as the separation and recovery apparatus 2 except that, two hydrothermal reaction treatment units 50A are connected and arranged in series via a heater 5, and a hydrolytic component recovery unit 60 (a cooling and precipitating subunit 60A, a solid-liquid separation subunit 60B, and a circulating water reheating unit 60C) is connected and arranged to each of the hydrothermal reaction treatment units 50A. Since each unit included in the separation and recovery apparatus 3 is the same as each unit of the separation and recovery apparatus 2, description thereof is omitted.

The heater 5 is not particularly limited as long as it can reheat a fluid flowing out from the hydrothermal treatment unit 50A disposed on an upstream side, and an appropriate heater can be used. In the separation and recovery apparatus 3, a unit similar to the circulating water reheating unit 60C is used.

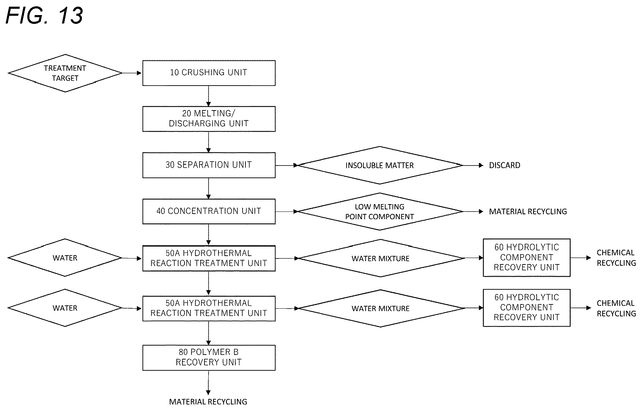

The separation and recovery apparatus 3 can execute a series of treatment processes illustrated in FIG. 13, and can obtain a workpiece obtained by each unit illustrated in FIG. 13. The nonhydrolyzable polymer B can be separated and recovered in the concentration unit 40, and the hydrolytic component a of the hydrolyzable polymer A can be recovered in each of the hydrolytic component recovery units 60. In this way, the hydrolytic component a of the hydrolyzable polymer A and the nonhydrolyzable polymer B can be continuously recovered and continuously hybrid-recycled.

A resin mixture used in the separation and recovery apparatus 3 is as described above, but for example, a resin mixture containing two kinds of hydrolyzable polymers A (for example, PET and nylon) and one kind of nonhydrolyzable polymer B, in which melting points of the hydrolyzable polymers A are higher than a melting point of the nonhydrolyzable polymer B, is preferable, and the two kinds of hydrolyzable polymers A have different melting points (TMA1 < TMA2).

The separation and recovery apparatus 3 includes two hydrothermal reaction treatment units 50A, and enables hybrid recycling similar to that of the separation and recovery apparatus 2. Furthermore, by adjusting a hydrothermal temperature of each of the hydrothermal reaction treatment units 50A, a predetermined hydrolyzable polymer A can undergo a hydrolysis reaction in each of the units. For example, the temperature of the hydrothermal treatment unit 50A disposed on an upstream side can be set to a temperature equal to or higher than a temperature at which the hydrolyzable polymer A having the melting point TMA1 can undergo a hydrolysis reaction and lower than a temperature at which the hydrolyzable polymer A having the melting point TMA2 does not undergo a hydrolysis reaction. Meanwhile, the temperature of the hydrothermal treatment unit 50A disposed on a downstream side can be set to a temperature equal to or higher than a temperature at which the hydrolyzable polymer A having the melting point TMA2 can undergo a hydrolysis reaction. As a result, the hydrolytic components a of the hydrolyzable polymers A1 and A2 can be chemically recycled separately by the hydrolytic component recovery units 60 connected to the hydrothermal reaction treatment units 50A.

A series of treatments in the separation and recovery apparatus 3 will be described.

In the separation and recovery apparatus 3, as in the separation and recovery apparatus 2, a high melting point component (hydrolyzable polymer A) flowing out from the insoluble component discharge port 34 of the concentration unit 40 is supplied to the first hydrothermal reaction treatment unit 50A. A water mixture (containing a hydrolytic component a1 of the hydrolyzable polymer A1) flowing out from the water mixture outlet 58 of the hydrothermal reaction treatment unit 50A is supplied to the hydrolytic component recovery unit 60, and the hydrolytic component a1 can be recovered. Meanwhile, a fluid flowing out from the residue outlet 54 of the hydrothermal reaction treatment unit 50A is reheated by the heater, and is supplied to the second hydrothermal reaction treatment unit 50A to be subjected to a hydrothermal reaction treatment. A water mixture (containing a hydrolytic component a2 of the hydrolyzable polymer A2) obtained in the second hydrothermal reaction treatment unit 50A is supplied to the hydrolytic component recovery unit 60, and the hydrolytic component a2 can be recovered. Finally, a fluid flowing out from the residue outlet 54 of the second hydrothermal reaction treatment unit is supplied to the polymer B recovery unit 80, and the nonhydrolyzable polymer B can be recovered. On the other hand, a low melting point component (nonhydrolyzable polymer B) flowing out from the fluid outlet 37 of the concentration unit 40 is separately recovered and subjected to material recycling. In this method, a plurality of decomposition products a can be continuously obtained by collectively treating a fluid containing a plurality of hydrolyzable polymers.

### <Further still another preferred separation and recovery apparatus of the present invention>

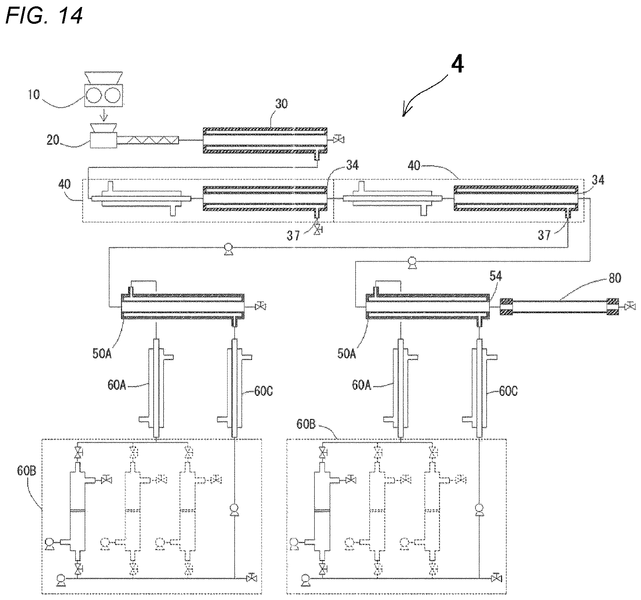

As illustrated in FIG. 14, a separation and recovery apparatus 4 according to further still another preferred embodiment of the present invention includes: two concentration units 40 connected in series; a hydrothermal reaction treatment unit 50A connected to a fluid outlet 37 of the concentration unit 40 on a downstream side; and a hydrothermal reaction treatment unit 50A connected to an insoluble component discharge port 34 of the concentration unit 40 on the downstream side. One hydrolytic component recovery unit 60 (a cooling and precipitating subunit 60A, a solid-liquid separation subunit 60B, and a circulating water reheating unit 60C) is connected and disposed to each of the hydrothermal reaction treatment units 50A. In addition, in the hydrothermal reaction treatment unit 50A connected to the insoluble component discharge port 34 of the concentration unit 40 on the downstream side, a polymer B recovery unit 80 is connected and disposed to a residue outlet 54 thereof. Components other than these components are similar to those of the separation and recovery apparatus 2. Since each unit included in the separation and recovery apparatus 4 is the same as each unit of the separation and recovery apparatus 2 or the like, description thereof is omitted.

A resin mixture used in the separation and recovery apparatus 4 is as described above, but for example, a resin mixture containing two kinds of hydrolyzable polymers A (for example, PET and nylon) and one kind of nonhydrolyzable polymer B, in which melting points of the hydrolyzable polymers A are higher than a melting point of the nonhydrolyzable polymer B, is preferable, and the two kinds of hydrolyzable polymers A have different melting points (TMA1

### < TMA2).

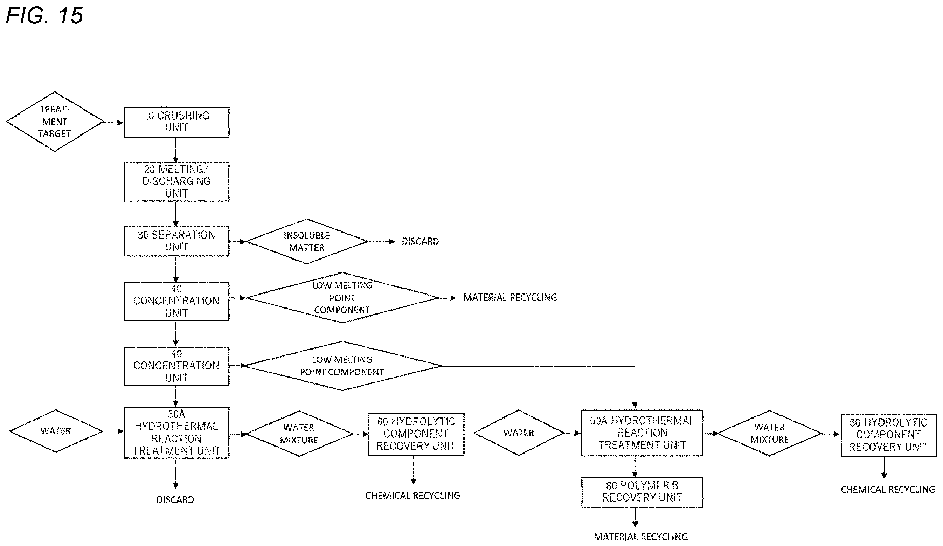

The separation and recovery apparatus 4 can execute a series of treatment processes illustrated in FIG. 15, and can obtain a workpiece obtained by each unit illustrated in FIG. 15. The nonhydrolyzable polymer B can be separated while a small amount of the hydrolyzable polymer A is mixed in the concentration unit 40 on the upstream side, and the nonhydrolyzable polymer B can be separated and recovered from the hydrolyzable polymer A mixed in a small amount in the concentration unit 40 on the downstream side. Here, a cooling temperature in the concentration unit 40 on the upstream side is set to a temperature higher than the melting point TMA2 of the hydrolyzable polymer A, and a cooling temperature in the concentration unit 40 on the downstream side is set to a temperature equal to or higher than the melting point MTB of the nonhydrolyzable polymer and lower than the melting point TMA1 of the hydrolyzable polymer A. Furthermore, in the hydrothermal reaction treatment unit 50 connected to the fluid outlet 37, a hydrothermal reaction temperature can be set to a temperature equal to or higher than a temperature at which the hydrolyzable polymer A having the melting point TMA2 can undergo a hydrolysis reaction. Meanwhile, in the temperature of the hydrothermal reaction treatment unit 50 connected to the insoluble component discharge port 34, a hydrothermal reaction temperature can be set to a temperature equal to or higher than a temperature at which the hydrolyzable polymer A having the melting point TMA1 can undergo a hydrolysis reaction and lower than a temperature at which the hydrolyzable polymer A having the melting point TMA2 does not undergo a hydrolysis reaction.

Next, a hydrolytic component a derived from a specific polymer A can be separated and recovered by the hydrolytic component recovery unit 60 connected to each of the hydrothermal reaction treatment units 50. In this way, the hydrolytic component a of the hydrolyzable polymer A and the nonhydrolyzable polymer B can be continuously recovered and continuously hybrid-recycled.

As described above, the separation and recovery apparatus 4 includes the two concentration units 40, the two hydrothermal reaction treatment units 50A, and the like, and enables hybrid recycling similarly to the separation and recovery apparatus 2. Furthermore, by adjusting the hydrothermal temperature of each of the hydrothermal reaction treatment units 50A, similarly to the separation and recovery apparatus 3, the separation and recovery apparatus 4 can allow the predetermined hydrolyzable polymer B to undergo a hydrolysis reaction in each of the units 50A, and can chemically recycle the hydrolytic components a of the hydrolyzable polymers B separately.

A series of treatments in the separation and recovery apparatus 4 will be described.

In the separation and recovery apparatus 4, as in the separation and recovery apparatus 2, a low melting point component is recovered from the fluid outlet 37 of the first-stage concentration unit 40, and then a fluid containing a plurality of high melting point components (hydrolyzable polymers A) flowing out from the insoluble component discharge port 34 is separated again by the second concentration unit, whereby the hydrolyzable polymer A having a low melting point is obtained from the fluid outlet 37 of the second concentration unit 40, and the hydrolyzable polymer A having a high melting point is obtained from the insoluble component discharge port 34. These hydrolyzable polymers A are supplied to the hydrothermal reaction treatment units 50A, respectively, and are subjected to a hydrothermal treatment, whereby the hydrolytic components a can be individually recovered. In addition, the nonhydrolyzable polymer B remaining in the hydrolyzable polymer A is mixed into the fluid discharged from the insoluble component discharge port 34 of the second concentration unit. Therefore, the polymer B recovery unit 80 is connected only to the second hydrothermal reaction treatment unit 50A, and the polymer B is also recovered.

### <Other components>

The separation and recovery apparatus of the present invention may include a unit other than the above units. Examples thereof include a storage tank for storing a raw material (for example, water used for a hydrothermal reaction treatment) used in the separation and recovery apparatus of the present invention, a transfer pipe and a pump for transferring a raw material stored in the storage tank to a unit, and a purification unit. In addition, a static mixer can be disposed in the first flow path of the hydrothermal reaction treatment unit. As a result, a melt flowing in the flow path is stirred, and a hydrolysis reaction can be promoted.

In each of the separation and recovery apparatuses 1 to 4, the hydrolytic component recovery unit includes the hydrolytic component recovery unit 60 applicable to a component whose solubility largely changes depending on temperature among hydrolytic components, but in the present invention, when a hydrolytic component that is not precipitated even when the temperature is lowered is recovered, a normal heat exchanger can be included, and the hydrolytic component can be cooled by the heat exchanger and recovered.

In addition, in each of the separation and recovery apparatuses 1 to 4, a cooler or a heater may be disposed on an outer peripheral surface of the coupling pipe, the transfer pipe, or the like that connects the units to each other.

Components and the like constituting the body, the inlet, and the like constituting each unit can be made of appropriate materials unless otherwise specified. Examples of such materials include various metals, ceramics, and heat-resistant resins.

As described above, it is found that the separation and recovery apparatus of the present invention can separate and recover, from a resin mixture containing a resin containing a hydrolyzable polymer and a resin containing a nonhydrolyzable polymer, the hydrolyzable polymer as a raw material compound thereof (hydrolytic component) and the nonhydrolyzable polymer as a high-purity polymer by a continuous process

### REFERENCE SIGNS LIST

This application claims priority on Patent Application No. 2021-101555 filed in Japan on June 18, 2021, and Patent Application No. 2022-097670 filed in Japan on June 16, 2022.

- 1 to 4: Separation and recovery apparatus
- 5: Heater
- 10: Crushing unit
- 20: Melting/discharging unit
- 30: Separation unit
- 31: Tubular body
- 32: Inlet
- 33: First flow path
- 34: Insoluble component discharge port
- 35: Separation film
- 36: Second flow path
- 37: Fluid outlet
- 40: Concentration unit
- 40A: Cooling subunit
- 40B: Removal subunit
- 41: Tubular body
- 42: Inlet
- 43: First flow path
- 44: Discharge port
- 45: Separation film
- 46: Second flow path
- 47: Fluid outlet
- 50: Hydrothermal reaction treatment unit
- 50A, 50B: Partition wall contact type hydrothermal reaction treatment unit
- 50C: Countercurrent contact type hydrothermal reaction treatment unit
- 51: Tubular body
- 52: Inlet
- 52A: Inflow discharge port
- 53: First flow path
- 54: Residue outlet
- 55: Diaphragm
- 55A: Filler
- 56: Second flow path
- 57: Water inlet
- 58: Water mixture outlet
- 60: Hydrolytic component recovery unit
- 60A: Cooling and precipitating subunit
- 60B: Solid-liquid separation subunit
- 60C: Circulating water reheating unit
- 61a, 61b, 61c: Transfer pipe
- 62: Inlet
- 63: Flow path
- 64: Outlet
- 65: Cooling jacket
- 65a: Cooling water inlet portion
- 65b: Cooling water discharge portion
- 66: Body
- 66a: Discharge portion
- 66b: Backwashing water introduction portion
- 67: Connection port
- 68: Outlet
- 69: Filtration film
- 70: Constant pressure pump
- 71: Back pressure valve
- 72: Circulation pump
- 80: Polymer B recovery unit
- 81: Tubular body
- 82: Residue inlet
- 83: Outlet
- 84: Removal film
- P: Flow path

## Claims

1. A separation and recovery apparatus for continuously separating and recovering, from a resin mixture containing at least a resin 1 containing a hydrolyzable polymer A as a main component and a resin 2 containing a nonhydrolyzable polymer B as a main component, a hydrolytic component a of the hydrolyzable polymer A and the nonhydrolyzable polymer B, the apparatus comprising:
a crushing unit that crushes the resin mixture;
a melting/discharging unit that melts a crushed product obtained by the crushing unit to form a fluid and discharges the fluid at a high pressure; and
a hydrothermal reaction treatment unit that continuously subjects the fluid discharged from the melting/discharging unit to a hydrothermal reaction treatment,
wherein, in the melting/discharging unit, the hydrolyzable polymer A is hydrolyzed, and the hydrolytic component a of the hydrolyzable polymer A is dissolved and transferred into water permeating a sintered alloy diaphragm, thereby separating the nonhydrolyzable polymer B;
**characterized in that** the separation and recovery apparatus further comprises, between the melting/discharging unit and the hydrothermal reaction treatment unit, a separation unit that removes an insoluble component contained in the fluid discharged from the melting/discharging unit,
wherein the separation unit comprises:
an inlet into which the fluid discharged from the melting/discharging unit flows;
a first flow path which is connected to the inlet and in which the fluid flowing in from the inlet flows at a high pressure;
a separation film that is disposed along the first flow path and separates an insoluble component in the fluid from the fluid;
a second flow path which is disposed on a side opposite to the first flow path with respect to the separation film and in which the fluid from which the insoluble component has been removed by the separation film flows;
a fluid outlet which is connected to the second flow path and from which the fluid from which the insoluble component has been removed flows out; and
an insoluble component discharge port which extends from the first flow path and from which the separated insoluble component is discharged.

2. The separation and recovery apparatus according to claim 1, wherein the melting/discharging unit melts and discharges the crushed product.

3. The separation and recovery apparatus according to claim 1 or 2, comprising, at a preceding stage of the hydrothermal reaction treatment unit, a concentration unit that separates the nonhydrolyzable polymer B and increases a content of the nonhydrolyzable polymer B in the fluid to be transferred to the hydrothermal reaction treatment unit,
wherein the concentration unit comprises:
a cooling subunit that precipitates and solidifies some of the polymers by cooling the transferred fluid; and
a removal subunit that is connected to the cooling subunit and removes the precipitated and solidified polymer component, and
wherein the removal subunit comprises:
an inlet into which the fluid transferred from the cooling subunit and containing the precipitated and solidified polymer flows;
a first flow path which is connected to the inlet and in which the fluid flowing in from the inlet flows;
a separation film that is disposed along the first flow path and separates the precipitated and solidified polymer contained in the fluid from the fluid;
a second flow path which is disposed on a side opposite to the first flow path with respect to the separation film and in which the fluid from which the precipitated and solidified polymer has been removed by the separation film flows;
a fluid outlet which is connected to the second flow path and from which the fluid from which the precipitated and solidified polymer has been removed flows out; and
a discharge port which extends from the first flow path and from which the precipitated and solidified polymer that has been separated is discharged.

4. The separation and recovery apparatus according to any one of claims 1 to 3, wherein the hydrothermal reaction treatment unit comprises:
an inlet into which a fluid containing the hydrolyzable polymer A flows;
a first flow path which is connected to the inlet and in which the fluid flowing in from the inlet flows;
a residue outlet which extends from the first flow path and from which a residue of the fluid that has been subjected to a hydrothermal reaction treatment flows out;
a diaphragm that is disposed along the first flow path, is water-permeable, and blocks passage of a molten polymer;
a second flow path which is disposed adjacent to the first flow path via the diaphragm on a side opposite to the first flow path with respect to the diaphragm and in which water flows;
a water inlet which is formed in the second flow path and through which water flows into the second flow path; and
a water mixture outlet which is formed in the second flow path and through which a water mixture containing the hydrolytic component a of the hydrolyzable polymer A, which has flowed in from the water inlet and passed through the diaphragm while flowing in the second flow path, flows out from the second flow path.

5. The separation and recovery apparatus according to any one of claims 1 to 4, comprising the one hydrothermal reaction treatment unit or the two or more hydrothermal reaction treatment units arranged and connected in series or in parallel.

6. The separation and recovery apparatus according to any one of claims 1 to 5, comprising, at a subsequent stage of the hydrothermal reaction treatment unit, a hydrolytic component recovery unit that recovers the hydrolytic component a of the hydrolyzable polymer A from the water mixture,
wherein the hydrolytic component recovery unit comprises:
a cooling and precipitating subunit including: an inlet into which the water mixture containing the hydrolytic component a flows; a flow path A which is connected to the inlet and in which the water mixture flowing in from the inlet flows; and an outlet which is connected to the flow path A and from which the hydrolytic component a flows out together with water; and
a solid-liquid separation subunit that is connected to the outlet of the cooling and precipitating subunit and separates the hydrolytic component a from the water mixture.

7. The separation and recovery apparatus according to any one of claims 1 to 6, comprising, at a subsequent stage of the hydrothermal reaction treatment unit, a polymer B recovery unit that recovers the nonhydrolyzable polymer B from the residue,
wherein the polymer B recovery unit comprises:
a residue inlet into which the residue flows;
a flow path P which is connected to the residue inlet and in which the residue flowing in from the residue inlet flows;
a removal film that is disposed along the flow path P and removes water and the hydrolytic component a remaining in the residue by causing the water and the hydrolytic component a to pass through the removal film; and
an outlet which is connected to a downstream side of the removal film in the flow path P and from which the polymer B separated from the remaining water and hydrolytic component a flows out.

## Patentansprüche

1. Trenn- und Rückgewinnungsvorrichtung zum kontinuierlichen Trennen und Rückgewinnen aus einer Harzmischung, die mindestens ein Harz 1, das ein hydrolysierbares Polymer A als Hauptkomponente enthält, und ein Harz 2, das ein nicht-hydrolysierbares Polymer B als Hauptkomponente enthält, umfasst, einer hydrolytischen Komponente a des hydrolisierbaren Polymers A und des nicht-hydrolisierbaren Polymers B, wobei die Vorrichtung umfasst:
eine Zerkleinerungseinheit, die die Harzmischung zerkleinert;
eine Schmelz-/Ableiteinheit, die ein durch die Zerkleinerungseinheit erhaltenes Zerkleinerungsprodukt schmilzt, um ein Fluid zu bilden, und das Fluid unter hohem Druck ableitet; und
eine hydrothermale Reaktionsbehandlungseinheit, die das aus der Schmelz-/Ableiteinheit abgeleitete Fluid kontinuierlich einer hydrothermalen Reaktionsbehandlung unterzieht,
wobei in der Schmelz-/Ableiteinheit das hydrolisierbare Polymer A hydrolysiert wird und die hydrolytische Komponente a des hydrolysierbaren Polymers A gelöst und in Wasser überführt wird, das eine gesinterte Legierungsmembran durchdringt, wodurch das nicht-hydrolysierbare Polymer B separiert wird;
**dadurch gekennzeichnet, dass** die Trenn- und Rückgewinnungsvorrichtung zwischen der Schmelz-/Ableiteinheit und der hydrothermalen Reaktionsbehandlungseinheit ferner eine Trenneinheit umfasst, die eine unlösliche Komponente entfernt, die in dem aus der Schmelz-/Ableiteinheit abgeleiteten Fluid enthalten ist,
wobei die Trenneinheit umfasst:
einen Einlass, in den das aus der Schmelz-/Ableiteinheit abgeleitete Fluid strömt;
einen ersten Strömungsweg, der mit dem Einlass verbunden ist und in den das aus dem Einlass einströmende Fluid mit hohem Druck fließt;
einen Trennfilm, der entlang des ersten Strömungswegs angeordnet ist und eine unlösliche Komponente in dem Fluid von dem Fluid trennt;
einen zweiten Strömungsweg, der auf einer Seite gegenüber dem ersten Strömungsweg in Bezug auf den Trennfilm angeordnet ist und in den das Fluid fließt, aus dem die unlösliche Komponente durch den Trennfilm entfernt wurde;
einen Fluidauslass, der mit dem zweiten Strömungsweg verbunden ist und aus dem das Fluid, aus dem die unlösliche Komponente entfernt wurde, abfließt; und
eine Auslassöffnung für die unlösliche Komponente, die sich vom ersten Strömungsweg erstreckt und aus der die abgetrennte unlösliche Komponente abgeleitet wird.

2. Trenn- und Rückgewinnungsvorrichtung nach Anspruch 1, wobei die Schmelz-/Ableiteinheit das zerkleinerte Produkt schmilzt und ableitet.

3. Trenn- und Rückgewinnungsvorrichtung nach Anspruch 1 oder 2, die in einer der hydrothermalen Reaktionsbehandlungseinheit vorgeschalteten Stufe eine Konzentrationseinheit umfasst, die das nicht-hydrolysierbare Polymer B abtrennt und den Gehalt des nicht-hydrolysierbaren Polymers B in dem zur hydrothermalen Reaktionsbehandlungseinheit zu leitenden Fluid erhöht, wobei die Konzentrationseinheit umfasst:
eine Kühlungs-Untereinheit, die einen Teil der Polymere durch Kühlung des abgeleiteten Fluid ausfällt und verfestigt; und
eine Entfernungs-Untereinheit, die mit der Kühlungs-Untereinheit verbunden ist und die ausgefällte und verfestigte Polymerkomponente entfernt, und
wobei die Entfernungseinheit umfasst:
einen Einlass, in den das aus der Kühlungs-Untereinheit übergeleitete und das ausgefällte und verfestigte Polymer enthaltende Fluid fließt;
einen ersten Strömungsweg, der mit dem Einlass verbunden ist und in den das aus dem Einlass strömende Fluid fließt;
einen Trennfilm, der entlang des ersten Strömungswegs angeordnet ist und das in dem Fluid enthaltene ausgefällte und verfestigte Polymer von dem Fluid trennt;
einen zweiten Strömungsweg, der auf einer Seite gegenüber dem ersten Strömungsweg in Bezug auf den Trennfilm angeordnet ist und in den das Fluid strömt, aus dem das ausgefällte und verfestigte Polymer durch den Trennfilm entfernt wurde;
einen Fluidauslass, der mit dem zweiten Strömungsweg verbunden ist und aus dem das Fluid, aus dem das ausgefällte und verfestigte Polymer entfernt wurde, herausströmt; und
eine Auslassöffnung, die sich vom ersten Strömungsweg erstreckt und aus der das ausgefällte und verfestigte Polymer, das abgetrennt wurde, abgeleitet wird.

4. Trenn- und Rückgewinnungsvorrichtung gemäß einem der Ansprüche 1 bis 3, wobei die hydrothermale Reaktionsbehandlungseinheit umfasst:
einen Einlass, in den das das hydrolysierbare Polymer A enthaltende Fluid strömt;
einen ersten Strömungsweg, der mit dem Einlass verbunden ist und in den das aus dem Einlass strömende Fluid fließt;
einen Rückstandsauslass, der sich vom ersten Strömungsweg erstreckt und aus dem ein Rückstand des Fluids, das einer hydrothermalen Reaktionsbehandlung unterzogen wurde, herausfließt;
eine Membran, die entlang des ersten Strömungswegs angeordnet ist, wasserdurchlässig ist und den Durchgang eines geschmolzenen Polymers blockiert;
einen zweiten Strömungsweg, der benachbart zum ersten Strömungsweg über die Membran auf einer Seite gegenüber dem ersten Strömungsweg in Bezug auf die Membran angeordnet ist und in den Wasser strömt;
einen Wassereinlass, der im zweiten Strömungsweg gebildet ist und durch den Wasser in den zweiten Strömungsweg fließt; und
einen Wassermischungsauslass, der in dem zweiten Strömungsweg gebildet ist und durch den eine Wassermischung, die die hydrolytische Komponente a des hydrolysierbaren Polymers A enthält, die aus dem Wassereinlass eingeströmt ist und durch die Membran hindurchgeflossen ist, während sie in den zweiten Strömungsweg strömte, aus dem zweiten Strömungsweg heraus fließt.

5. Trenn- und Rückgewinnungsvorrichtung gemäß einem der Ansprüche 1 bis 4, umfassend die eine hydrothermale Reaktionsbehandlungseinheit oder die zwei oder mehr hydrothermalen Reaktionsbehandlungseinheiten, die in Reihe oder parallel angeordnet und verbunden sind.

6. Trenn- und Rückgewinnungsvorrichtung gemäß einem der Ansprüche 1 bis 5, umfassend in einem nachfolgenden Schritt der hydrothermalen Reaktionsbehandlungseinheit eine hydrolytische Komponentenrückgewinnungseinheit, die die hydrolytische Komponente a des hydrolysierbaren Polymers A aus dem Wassermischung zurückgewinnt, wobei die Einheit zur Rückgewinnung der hydrolytischen Komponente umfasst:
Kühlungs- und Ausfäll-Untereinheit, die umfasst: einen Einlass, in den die die hydrolytische Komponente a enthaltende Wassermischung einströmt; einen Strömungsweg A, der mit dem Einlass verbunden ist und in den die aus dem Einlass einströmende Wassermischung strömt; und einen Auslass, der mit dem Strömungsweg A verbunden ist und aus dem die hydrolytische Komponente a zusammen mit Wasser ausströmt; und
eine Fest-Flüssig-Trenn-Untereinheit, die mit dem Auslass der Kühlungs-und Ausfäll-Untereinheit verbunden ist und die hydrolytische Komponente a von der Wassermischung abtrennt.

7. Trenn- und Rückgewinnungsvorrichtung gemäß einem der Ansprüche 1 bis 6, umfassend in einem nachfolgenden Schritt der hydrothermalen Reaktionsbehandlungseinheit eine Polymer-B-Rückgewinnungseinheit, die das nicht-hydrolysierbare Polymer B aus dem Rückstand zurückgewinnt,
wobei die Polymer-B-Rückgewinnungseinheit umfasst:
einen Rückstandseinlass, in den der Rückstand fließt;
einen Strömungsweg P, der mit dem Rückstandseinlass verbunden ist und in den der aus dem Rückstandseinlass einströmende Rückstand strömt;
einen Entfernungsfilm, der entlang des Strömungswegs P angeordnet ist und Wasser und die hydrolytische Komponente a, die im Rückstand verbleiben, entfernt, indem er das Wasser und die hydrolytische Komponente a durch den Entfernungsfilm leitet; und
einen Auslass, der mit einer stromabwärtigen Seite des Entfernungsfilms im Strömungsweg P verbunden ist und aus dem das von dem verbleibenden Wasser und der hydrolytischen Komponente a getrennte Polymer B herausfließt.

## Revendications

1. Dispositif de séparation et de récupération destiné à séparer et récupérer en continu, à partir d'un mélange de résines contenant au moins une résine 1 contenant un polymère hydrolysable A comme composant principal et une résine 2 contenant un polymère non hydrolysable B comme composant principal, un composant hydrolytique a du polymère hydrolysable A et le polymère non hydrolysable B, le dispositif comprenant:
une unité de broyage qui broie le mélange de résines;
une unité de fusion/décharge qui fait fondre un produit broyé obtenu par l'unité de broyage pour former un fluide et décharge le fluide à haute pression; et
une unité de traitement par réaction hydrothermique qui soumet en continu le fluide déchargé de l'unité de fusion/décharge à un traitement par réaction hydrothermique,
dans lequel, dans l'unité de fusion/décharge, le polymère hydrolysable A est hydrolysé, et le composant hydrolytique a du polymère hydrolysable A est dissous et transféré dans l'eau qui imprègne un diaphragme en alliage fritté, séparant ainsi le polymère non hydrolysable B;
**caractérisé en ce que** l'appareil de séparation et de récupération comprend en outre, entre l'unité de fusion/décharge et l'unité de traitement par réaction hydrothermique, une unité de séparation qui élimine un composant insoluble contenu dans le fluide déchargé de l'unité de fusion/ décharge,
dans lequel l'unité de séparation comprend:
une entrée dans laquelle s'écoule le fluide déchargé de l'unité de fusion/décharge;
un premier chemin d'écoulement qui est relié à l'entrée et dans lequel le fluide s'écoulant depuis l'entrée s'écoule à haute pression;
un film de séparation qui est disposé le long du premier chemin d'écoulement et qui sépare un composant insoluble dans le fluide du fluide;
un deuxième chemin d'écoulement qui est disposé sur un côté opposé au premier chemin d'écoulement par rapport au film de séparation et dans lequel s'écoule le fluide dont le composant insoluble a été éliminé par le film de séparation;
une sortie de fluide qui est reliée au deuxième chemin d'écoulement et à partir de laquelle s'écoule le fluide dont le composant insoluble a été éliminé; et
un orifice de décharge de composant insoluble qui s'étend à partir du premier chemin d'écoulement et à partir duquel le composant insoluble séparé est déchargé.

2. Dispositif de séparation et de récupération selon la revendication 1, dans lequel l'unité de fusion/décharge fait fondre et décharger le produit broyé.

3. Dispositif de séparation et de récupération selon la revendication 1 ou 2, comprenant, à un stade précédant l'unité de traitement par réaction hydrothermique, une unité de concentration qui sépare le polymère B non hydrolysable et augmente la teneur en polymère B non hydrolysable dans le fluide à transférer vers l'unité de traitement par réaction hydrothermique,
dans lequel l'unité de concentration comprend:
une sous-unité de refroidissement qui précipite et solidifie certains des polymères en refroidissant le fluide transféré; et
une sous-unité d'élimination qui est reliée à la sous-unité de refroidissement et élimine le composant polymère précipité et solidifié, et
dans laquelle la sous-unité d'élimination comprend:
une entrée dans laquelle s'écoule le fluide transféré depuis la sous-unité de refroidissement et contenant le polymère précipité et solidifié;
un premier chemin d'écoulement qui est relié à l'entrée et dans lequel s'écoule le fluide provenant de l'entrée;
un film de séparation qui est disposé le long du premier chemin d'écoulement et sépare le polymère précipité et solidifié contenu dans le fluide du fluide;
un deuxième chemin d'écoulement qui est disposé sur un côté opposé au premier chemin d'écoulement par rapport au film de séparation et dans lequel s'écoule le fluide dont le polymère précipité et solidifié a été éliminé par le film de séparation;
une sortie de fluide qui est reliée au deuxième chemin d'écoulement et à partir de laquelle s'écoule le fluide dont le polymère précipité et solidifié a été éliminé; et
un orifice de décharge qui s'étend à partir du premier chemin d'écoulement et à partir duquel le polymère précipité et solidifié qui a été séparé est évacué.

4. Dispositif de séparation et de récupération selon l'une des revendications 1 à 3, dans lequel l'unité de traitement par réaction hydrothermique comprend:
une entrée dans laquelle s'écoule un fluide contenant le polymère hydrolysable A;
un premier chemin d'écoulement qui est relié à l'entrée et dans lequel s'écoule le fluide provenant de l'entrée;
une sortie de résidus qui s'étend à partir du premier chemin d'écoulement et à partir de laquelle s'écoule un résidu du fluide qui a été soumis à un traitement par réaction hydrothermique;
un diaphragme qui est disposé le long du premier chemin d'écoulement, qui est perméable à l'eau et qui bloque le passage d'un polymère fondu;
un deuxième chemin d'écoulement qui est disposé à côté du premier chemin d'écoulement via le diaphragme, du côté opposé au premier chemin d'écoulement par rapport au diaphragme, et dans lequel s'écoule de l'eau;
une entrée d'eau qui est formée dans le deuxième chemin d'écoulement et à travers laquelle l'eau s'écoule dans le deuxième chemin d'écoulement; et
une sortie de mélange d'eau qui est formée dans le deuxième chemin d'écoulement et à travers laquelle un mélange d'eau contenant le composant hydrolytique a du polymère hydrolysable A, qui s'est écoulé depuis l'entrée d'eau et a traversé le diaphragme tout en s'écoulant dans le deuxième chemin d'écoulement, s'écoule depuis le deuxième chemin d'écoulement.

5. Dispositif de séparation et de récupération selon l'une des revendications 1 à 4, comprenant une unité de traitement par réaction hydrothermique ou deux ou plusieurs unités de traitement par réaction hydrothermique disposées et connectées en série ou en parallèle.

6. Dispositif de séparation et de récupération selon l'une des revendications 1 à 5, comprenant, à un stade ultérieur de l'unité de traitement par réaction hydrothermique, une unité de récupération de composants hydrolytiques qui récupère le composant hydrolytique a du polymère hydrolysable A à partir du mélange aqueux,
dans lequel l'unité de récupération du composant hydrolytique comprend:
une sous-unité de refroidissement et de précipitation comprenant: une entrée dans laquelle s'écoule le mélange aqueux contenant le composant hydrolytique a; un chemin d'écoulement A qui est relié à l'entrée et dans lequel s'écoule le mélange aqueux provenant de l'entrée; et une sortie qui est reliée au chemin d'écoulement A et à partir de laquelle le composant hydrolytique a s'écoule avec l'eau; et
une sous-unité de séparation solide-liquide qui est reliée à la sortie de la sous-unité de refroidissement et de précipitation et qui sépare le composant hydrolysable a du mélange aqueux.

7. Dispositif de séparation et de récupération selon l'une des revendications 1 à 6, comprenant, à un stade ultérieur de l'unité de traitement par réaction hydrothermique, une unité de récupération du polymère B qui récupère le polymère B non hydrolysable à partir du résidu,
dans lequel l'unité de récupération du polymère B comprend:
une entrée de résidus dans laquelle s'écoule le résidu;
un chemin d'écoulement P qui est relié à l'entrée de résidus et dans lequel s'écoule le résidu provenant de l'entrée de résidus;
un film d'élimination qui est disposé le long du chemin d'écoulement P et qui élimine l'eau et le composant hydrolytique a restant dans le résidu en faisant passer l'eau et le composant hydrolytique a à travers le film d'élimination; et
une sortie qui est reliée à un côté aval du film d'élimination dans le chemin d'écoulement P et à partir de laquelle s'écoule le polymère B séparé de l'eau restante et du composant hydrolytique a.
